# EUROPEAN PATENT SPECIFICATION

(11) **EP 3 852 536 B1**
(45) Date of publication and mention of the grant of the patent: **07.10.2026**
(21) Application number: 19779689.9
(22) Date of filing: 18.09.2019
(51) Int. Cl.: A01N 63/20, A01P 5/00, A01P 7/04

(54) **METHODS OF CONTROLLING ANIMAL PESTS WITH PAENIBACILLUS TERRAE**
VERFAHREN ZUR BEKÄMPFUNG VON TIERISCHEN SCHÄDLINGEN MIT PAENIBACILLUS TERRAE
PROCÉDÉS DE LUTTE CONTRE LES ANIMAUX NUISIBLES À L'AIDE DE PAENIBACILLUS TERRAE

(30) Priority: 20.09.2018 US 201862734057 P
(43) Date of publication of application: 28.07.2021
(73) Proprietor: Bayer CropScience LLC, St. Louis, MO 63167 (US)
(72) Inventor: JUNEJA, Punita, Davis, California 95618 (US); TAYLOR, Colleen S., Folsom, California 95630 (US); WHITSON-WHENNAN, Emily L., West Sacramento, California 95691 (US)
(74) Representative: BIP Patents
(86) International application number: PCT/US2019/051638
(87) International publication number: WO 2020/061140

(56) References cited:
- WO-A1-2008/049230
- WO-A1-2019/099635
- ELLIOT NICHOLAS GRADY ET AL: "Current knowledge and perspectives of Paenibacillus: a review", MICROBIAL CELL FACTORIES, vol. 15, no. 1, 1 December 2016 (2016-12-01), XP055376371, DOI: 10.1186/s12934-016-0603-7

## Description

### TECHNICAL FIELD

The present invention relates to the field of bacterial strains and their ability to control animal pests. In particular, the present invention is directed to *Paenibacillus terrae* strains with relatively high levels of insecticidal activity.

### BACKGROUND

Synthetic pesticides may be non-specific and therefore can act on organisms other than the target ones, including other naturally occurring beneficial organisms. Because of their chemical nature, they may also be toxic and non-biodegradable. Consumers worldwide are increasingly conscious of the potential environmental and health problems associated with the residuals of chemicals, particularly in food products. This has resulted in growing consumer pressure to reduce the use or at least the quantity of chemical (i.e., synthetic) pesticides. Thus, there is a need to manage food chain requirements while still allowing effective pest control.

A further problem arising with the use of synthetic insecticides is that the repeated and exclusive application of an insecticide often leads to selection of resistant insects. Normally, such insects are also cross-resistant against other active ingredients having the same mode of action. An effective control of the insects with said active compounds is then not possible any longer. However, active ingredients having new mechanisms of action are difficult and expensive to develop.

The risk of resistance development in insect populations as well as environmental and human health concerns have fostered interest in identifying alternatives to synthetic insecticides for managing plant and crop damage from insects. The use of biological control agents is one alternative.

*Paenibacillus* is a genus of low GC-content, endospore-forming, Gram-positive bacteria (*Firmicutes*). Bacteria belonging to this genus are prolific producers of industrially-relevant extracellular enzymes and antimicrobial substances, including non-ribosomal peptide classes like fusaricidin and polymyxin. Fusaricidins are known to have antimicrobial activity against various plant-pathogenic fungi and bacteria. While the fungicidal activity of *Paenibacillus* has been well characterized, less is known about the insecticidal activity of bacteria in this genus. WO2019/099635 (document belonging to the prior-art according to article 54(3) EPC) discloses methods for generating recombinant *Paenibacillus* endospores. Elliot, N.G., et al. (2016), 'Current knowledge and perspectives of Paenibacillus: a review', Microbial Cell Factories, 15(1) provides an overview of the current state of knowledge and future perspectives on *Paenibacillus.* The review discusses the insecticidal and nematicidal activities reported for species within this genus.

There is a need for effective biological control agents with insecticidal activity to complement the use of traditional, synthetic insecticides and to address the growing challenge of insect resistance.

### SUMMARY

The present invention is directed to a method of controlling animal pests comprising applying to an animal pest an effective amount of a composition comprising a biologically pure culture of a *Paenibacillus terrae* strain or a cell-free preparation thereof as characterized in the claims.

In some embodiments, the present invention relates to a method of protecting a useful plant or a part of a useful plant in need of protection from animal pest damage as characterized in the claims, the method comprising contacting an animal pest, a plant, a plant propagule, a seed of a plant, and/or a locus where a plant is growing or is intended to grow with an effective amount of a composition comprising a biologically pure culture of a *Paenibacillus terrae* strain or a cell-free preparation thereof.

In other embodiments, the present invention is directed to a method of protecting a seed or a plant from which the seed grows from damage by animal pests as characterized in the claims comprising treating an animal pest, a seed, and/or a locus where a seed is growing or is intended to grow with an effective amount of a composition comprising a biologically pure culture of a *Paenibacillus terrae* strain or a cell-free preparation thereof. In one aspect, the seed is transgenic seed.

In certain aspects, the *Paenibacillus terrae* strain is *Paenibacillus terrae* strain NRRL B-50972, *Paenibacillus terrae* strain NRRL B-67129, *Paenibacillus terrae* strain NRRL B-67306, *Paenibacillus terrae* strain NRRL B-67304, *Paenibacillus terrae* strain NRRL B-67615, or an insecticidal mutant strain thereof. In one aspect, the *Paenibacillus terrae* strain is *Paenibacillus terrae* strain NRRL B-67615 as characterized in the claims.

In some embodiments, the animal pest is from the order of Coleoptera, Lepidoptera, or Hemiptera.

In one embodiment, the animal pest is from the order of Coleoptera and is *Acanthoscelides obtectus, Adoretus* spp., *Agelastica alni, Agriotes* spp., *Amphimallon solstitialis, Anobium punctatum, Anoplophora* spp., *Anthonomus* spp., *Anthrenus* spp., *Apogonia* spp., *Atomaria* spp., *Attagenus* spp., *Bruchidius obtectus, Bruchus* spp., *Ceuthorhynchus* spp., *Cleonus mendicus, Conoderus* spp., *Cosmopolites* spp., *Costelytra zealandica, Curculio* spp., *Cryptorhynchus lapathi, Dermestes* spp., *Diabrotica* spp., *Epilachna* spp., *Faustinus cubae, Gibbium psylloides, Heteronychus arator, Hylamorpha elegans, Hylotrupes bajulus, Hypera postica, Hypothenemus* spp., *Lachnosterna consanguinea, Leptinotarsa decemlineata, Lissorhoptrus oryzophilus, Lixus* spp., *Lyctus* spp., *Meligethes aeneus, Melolontha melolontha, Migdolus* spp., *Monochamus* spp., *Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga* spp., *Popillia japonica, Premnotrypes* spp., *Psylliodes chrysocephala, Ptinus* spp., *Rhizobius ventralis, Rhizopertha dominica, Sitophilus* spp., *Sphenophorus* spp., *Sternechus* spp., *Symphyletes* spp., *Tenebrio molitor, Tribolium* spp., *Trogoderma* spp., *Tychius* spp., *Xylotrechus* spp., or *Zabrus* spp.

In another embodiment, the animal pest is from the order of Lepidoptera and is *Acronicta major, Aedia leucomelas, Agrotis* spp., *Alabama argillacea, Anticarsia* spp., *Barathra brassicae, Bucculatrix thurberiella, Bupalus piniarius, Cacoecia podana, Capua reticulana, Carpocapsa pomonella, Cheimatobia brumata, Chilo* spp., *Choristoneura fumiferana, Clysia ambiguella, Cnaphalocerus* spp., *Earias insulana, Ephestia kuehniella, Euproctis chrysorrhoea, Euxoa* spp., *Feltia* spp., *Galleria mellonella, Helicoverpa* spp., *Heliothis* spp., *Hofmannophila pseudospretella, Homona magnanima, Hyponomeuta padella, Laphygma* spp., *Lithocolletis blancardella, Lithophane antennata, Loxagrotis albicosta, Lymantria* spp., *Malacosoma neustria, Mamestra brassicae, Mocis repanda, Mythimna separata, Oria* spp., *Oulema oryzae, Panolis flammea, Pectinophora gossypiella, Phyllocnistis citrella, Pieris* spp., *Plutella xylostella, Prodenia* spp., *Pseudaletia* spp., *Pseudoplusia includens, Pyrausta nubilalis, Spodoptera* spp., *Thermesia gemmatalis, Tinea pellionella, Tineola bisselliella, Tortrix viridana,* or *Trichoplusia* spp.

In yet another embodiment, the animal pest is from the order of Hemiptera and the suborder Heteroptera and is *Aelia* spp., *Anasa tristis, Antestiopsis* spp., *Boisea* spp., *Blissus* spp., *Calocoris* spp., *Campylomma livida, Cavelerius* spp., *Cimex* spp., *Collaria* spp., *Creontiades dilutus, Dasynus piperis, Dichelops furcatus, Diconocoris hewetti, Dysdercus* spp., *Euschistus* spp., *Eurydema* spp., *Eurygaster* spp., *Halyomorpha halys, Heliopeltis* spp., *Horcias nobilellus, Leptocorisa* spp., *Leptocorisa varicornis, Leptoglossus occidentalis, Leptoglossus phyllopus, Lygocoris* spp., *Lygus* spp., *Macropes excavatus, Megacopta cribraria, Miridae, Monalonion atratum, Nezara* spp., *Nysius* spp., *Oebalus* spp., *Pentomidae, Piesma quadrata, Piezodorus* spp., *Psallus* spp., *Pseudacysta persea, Rhodnius* spp., *Sahlbergella singularis, Scaptocoris castanea, Scotinophora* spp., *Stephanitis nashi, Tibraca* spp., or *Triatoma* spp.

In certain aspects with regard to *Paenibacillus terrae* strain NRRL B-50972 and NRRL B-67129, the animal pest is from the phylum Nematoda. In one aspect, the animal pest is *Aglenchus* spp., *Anguina* spp., *Aphelenchoides* spp., *Belonolaimus* spp., *Bursaphelenchus* spp., *Cacopaurus* spp., *Criconemella* spp., *Criconemoides* spp., *Ditylenchus* spp., *Dolichodorus* spp., *Globodera* spp., *Helicotylenchus* spp., *Hemicriconemoides* spp., *Hemicycliophora* spp., *Heterodera* spp., *Hoplolaimus* spp., *Longidorus* spp., *Meloidogyne* spp., *Meloinema* spp., *Nacobbus* spp., *Neotylenchus* spp., *Paralongidorus* spp., *Paraphelenchus* spp., *Paratrichodorus* spp., *Pratylenchus* spp., *Pseudohalenchus* spp., *Psilenchus* spp., *Punctodera* spp., *Quinisulcius* spp., *Radopholus* spp., *Rotylenchulus* spp., *Rotylenchus* spp., *Scutellonema* spp., *Subanguina* spp., *Trichodorus* spp., *Tylenchulus* spp., *Tylenchorhynchus* spp., or *Xiphinema* spp.

In yet other aspects, the composition comprises a fermentation product of the *Paenibacillus terrae* strain. In one aspect, the composition is a liquid formulation. In another aspect, the composition comprises at least about 1 × 10⁴ CFU of the *Paenibacillus terrae* strain/mL of the liquid formulation. In yet another aspect, the composition further comprises an agriculturally acceptable carrier, inert, stabilization agent, preservative, nutrient, and/or physical property modifying agent.

In some embodiments, the composition is applied at about 1 × 10⁴ to about 1 × 10¹⁴ colony forming units (CFU) per hectare or at about 0.1 kg to about 20 kg fermentation solids per hectare.

In other embodiments, the present invention relates to the use of a composition comprising a biologically pure culture of a *Paenibacillus terrae* strain or a cell-free preparation thereof for controlling animal pests, for protecting a useful plant or a part of a useful plant in need of protection from animal pest damage, or for protecting a seed or a plant from which the seed grows from damage by animal pests as characterized in the claims.

In one embodiment, the animal pest is from the order of Coleoptera, Lepidoptera, or Hemiptera or when the *Paenibacillus terrae* strain is NRRL B-50972 or NRRL B-67129, is from the phylum Nematoda.

### BRIEF DESCRIPTION OF THE DRAWINGS

**FIG. 1** depicts the insecticidal activity of several *Paenibacillus* species against *Plutella xylostella* (diamondback moth) and *Trichoplusia ni* (cabbage looper).
**FIG. 2** depicts the activity of *Paenibacillus terrae* strain NRRL B-50972 against *Caenorhabditis elegans.*
**FIG. 3** depicts the activity of *Paenibacillus terrae* strain NRRL B-50972 against *Nezara viridula* (southern green stinkbug).
**FIG. 4** depicts the activity of *Paenibacillus terrae* strain NRRL B-50972 against *Anticarsia gemmatalis* (velvetbean caterpillar).
**FIG. 5** depicts the activity of *Paenibacillus terrae* strain NRRL B-50972 against *Spodoptera eridania* (southern armyworm).
**FIG. 6** depicts the activity of *Paenibacillus terrae* strain NRRL B-50972 against *Diabrotica undecimpunctata undecimpunctata* (western spotted cucumber beetle).

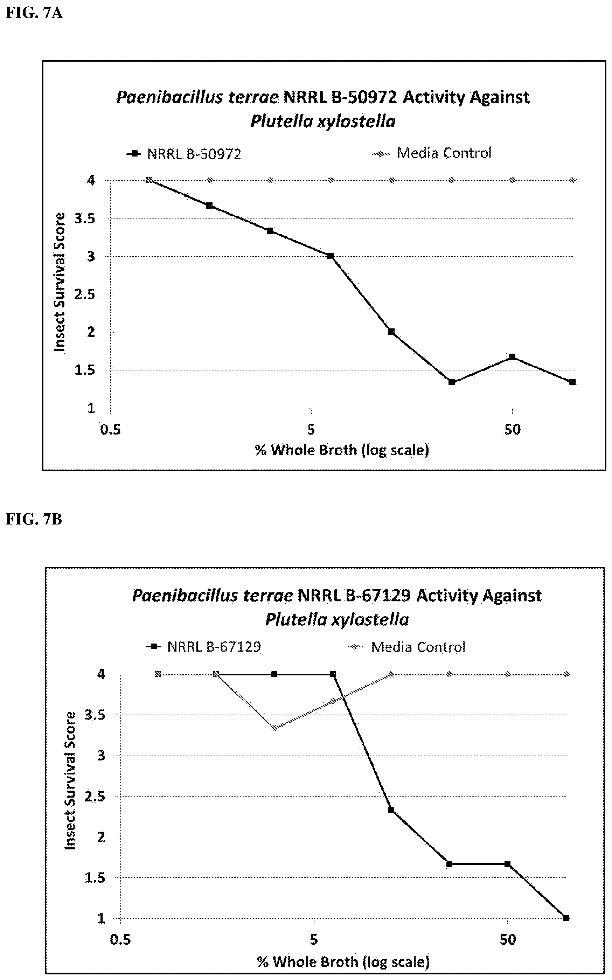

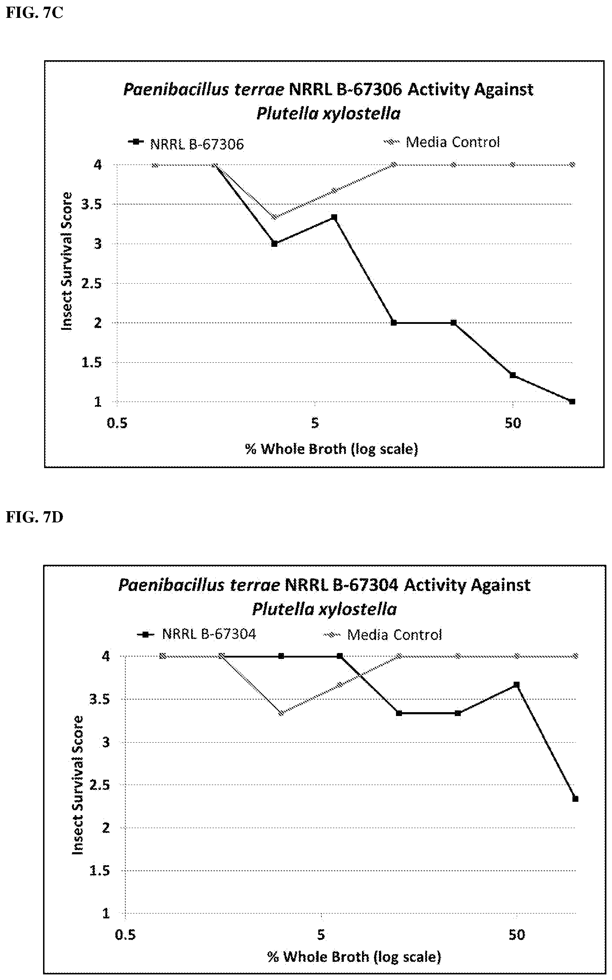

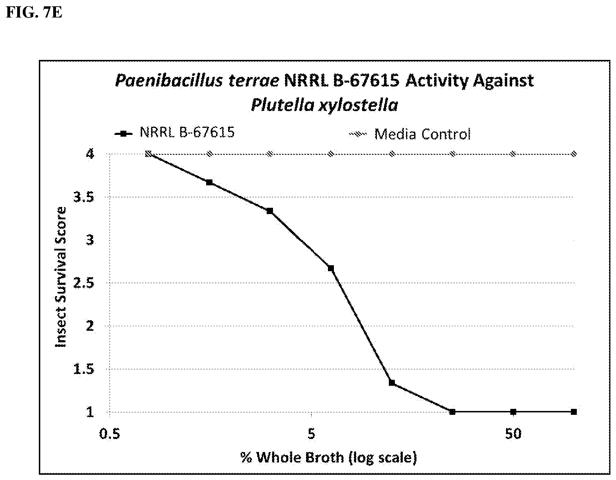

**FIG. 7A** depicts the activity against *Plutella xylostella* (diamondback moth) of *Paenibacillus terrae* strain NRRL B-50972. **FIG. 7B** depicts the activity against *Plutella xylostella* (diamondback moth) of *Paenibacillus terrae* strain NRRL B-67129. **FIG. 7C** depicts the activity against *Plutella xylostella* (diamondback moth) of *Paenibacillus terrae* strain NRRL B-67306. **FIG. 7D** depicts the activity against *Plutella xylostella* (diamondback moth) of *Paenibacillus terrae* strain NRRL B-67304. And **FIG. 7E** depicts the activity against *Plutella xylostella* (diamondback moth) of and *Paenibacillus terrae* strain NRRL B-67615.

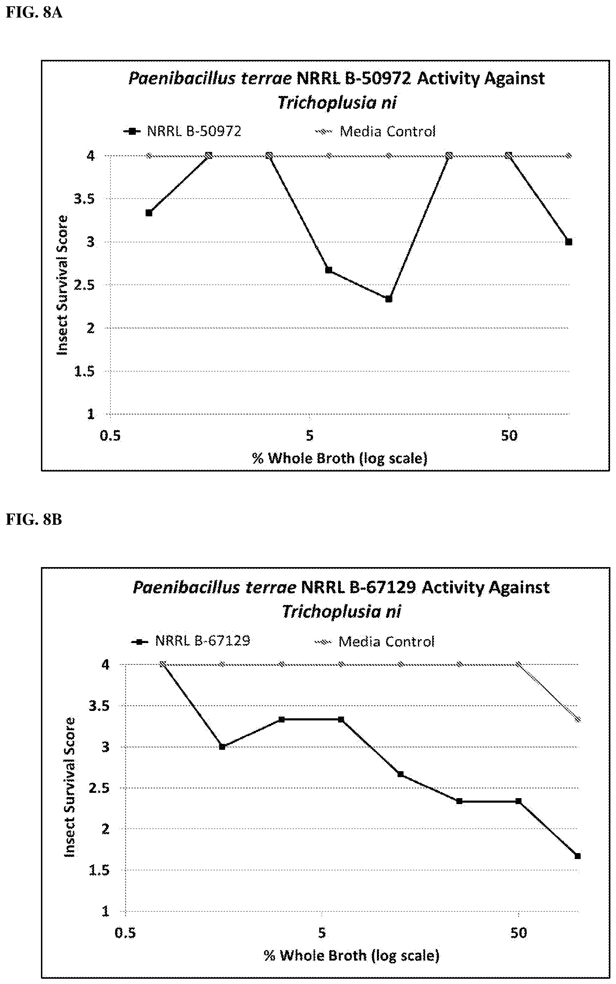

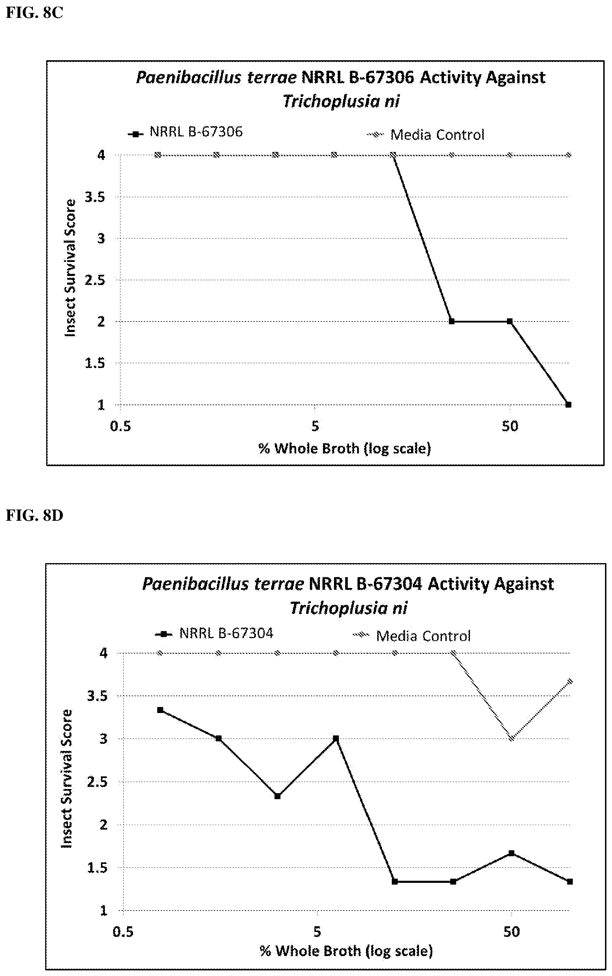

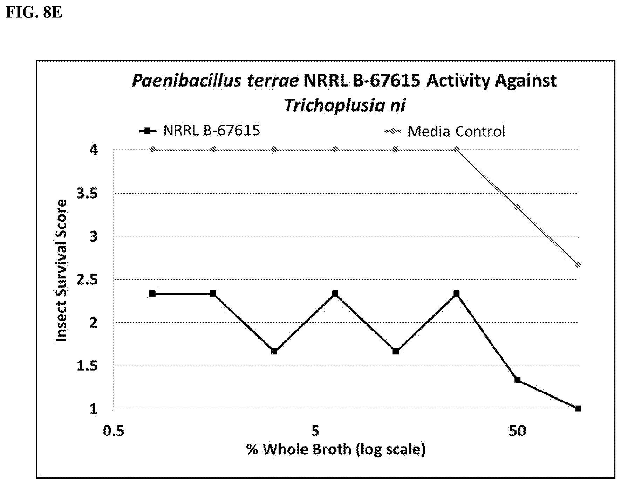

**FIG. 8A** depicts the activity against *Trichoplusia ni* (cabbage looper) of *Paenibacillus terrae* strain NRRL B-50972. **FIG. 8B** depicts the activity against *Trichoplusia ni* (cabbage looper) of *Paenibacillus terrae* strain NRRL B-67129. **FIG. 8C** depicts the activity against *Trichoplusia ni* (cabbage looper) of *Paenibacillus terrae* strain NRRL B-67306. **FIG. 8D** depicts the activity against *Trichoplusia ni* (cabbage looper) of *Paenibacillus terrae* strain NRRL B-67304. And **FIG. 8E** depicts the activity against *Trichoplusia ni* (cabbage looper) of *Paenibacillus terrae* strain NRRL B-67615.

### DETAILED DESCRIPTION

The microorganisms and particular strains described herein, unless specifically noted otherwise, are all separated from nature and grown under artificial conditions such as in shake flask cultures or through scaled-up manufacturing processes, such as in bioreactors to maximize bioactive metabolite production, for example. Growth under such conditions leads to strain "domestication." Generally, such a "domesticated" strain differs from its counterparts found in nature in that it is cultured as a homogenous population that is not subject to the selection pressures found in the natural environment but rather to artificial selection pressures.

As used herein, the verb "comprise" as is used in this description and in the claims and its conjugations are used in its non-limiting sense to mean that items following the word are included, but items not specifically mentioned are not excluded. In addition, reference to an element by the indefinite article "a" or "an" does not exclude the possibility that more than one of the elements are present, unless the context clearly requires that there is one and only one of the elements. The indefinite article "a" or "an" thus usually means "at least one".

The term "locus" is to be understood as any type of environment, soil, area or material where the plant is growing or intended to grow as well as the environmental conditions (such as temperature, water availability, radiation) that have an influence on the growth and development of the plant and/or its propagules. In addition, the term "locus" is to be understood as a plant, seed, soil, area, material or environment in which a pest is growing or may grow.

The term "seed"embraces seeds and plant propagules of all kinds including but not limited to true seeds, seed pieces, suckers, corms, bulbs, fruit, tubers, grains, cuttings, cut shoots and the like and means, in one aspect, true seeds.

*Paenibacillus terrae* strain NRRL B-50972 and *Paenibacillus terrae* strain NRRL B-67129 were previously identified as producers of a unique group of fusaricidins and fusaricidin-like compounds with broad spectrum antifungal activity (WO 2016/154297). *Paenibacillus terrae* strain NRRL B-67304, *Paenibacillus terrae* strain NRRL B-67306, and *Paenibacillus terrae* strain NRRL B-67615 are related to *Paenibacillus terrae* strain NRRL B-50972 and *Paenibacillus terrae* strain NRRL B-67129 and express a mutant DegU and/or mutant DegS resulting in a liquid culture with decreased viscosity compared to a liquid culture of a *Paenibacillus* sp. strain expressing a wild-type DegU and a wild-type DegS (U.S. Patent Application No. 62/671,067).

The mutant(s) described hereafter do not form part of the invention. In one aspect, the *Paenibacillus terrae* strain is *Paenibacillus terrae* strain NRRL B-50972 or an insecticidal mutant thereof. In another aspect, the *Paenibacillus terrae* strain is *Paenibacillus terrae* strain B-67129. In another aspect, the *Paenibacillus terrae* strain is *Paenibacillus terrae* strain B-67304. In another aspect, the *Paenibacillus terrae* strain is *Paenibacillus terrae* strain B-67306. In another aspect, the *Paenibacillus terrae* strain is *Paenibacillus terrae* strain B-67615, all of the above as characterized in the claims.

The mutant(s) described hereafter do not form part of the invention. Described herein are mutant strains of the *Paenibacillus terrae* strain NRRL B-50972, *Paenibacillus terrae* strain NRRL B-67129, *Paenibacillus terrae* strain NRRL B-*67304, Paenibacillus terrae* strain NRRL B-67306, or *Paenibacillus terrae* strain NRRL B-67615. The term "mutant" refers to a genetic variant derived from the *Paenibacillus terrae* strain. The mutant has one or more or all the identifying (functional) characteristics of *Paenibacillus terrae* strain NRRL B-50972, *Paenibacillus terrae* strain NRRL B-67129, *Paenibacillus terrae* strain NRRL B-67304, *Paenibacillus terrae* strain NRRL B-67306, or *Paenibacillus terrae* strain NRRL B-67615. The mutant or a fermentation product thereof controls (as an identifying functional characteristic) animal pests (e.g., insects or nematodes), fungi, oomycetes and/or bacteria at least as well as the parent *Paenibacillus terrae* strain NRRL B-50972, *Paenibacillus terrae* strain NRRL B-67129, *Paenibacillus terrae* strain NRRL B-*67304, Paenibacillus terrae* strain NRRL B-67306, or *Paenibacillus terrae* strain NRRL B-67615. Such mutants may be genetic variants having a genomic sequence that has greater than about 85%, greater than about 90%, greater than about 95%, greater than about 98%, or greater than about 99% sequence identity to *Paenibacillus terrae* strain NRRL B-50972, *Paenibacillus terrae* strain NRRL B-67129, *Paenibacillus terrae* strain NRRL B-67304, *Paenibacillus terrae* strain NRRL B-67306, or *Paenibacillus terrae* strain NRRL B-67615. Mutants may be obtained by treating cells of *Paenibacillus terrae* strain NRRL B-50972, *Paenibacillus terrae* strain NRRL B-67129, *Paenibacillus terrae* strain NRRL B-67304, *Paenibacillus terrae* strain NRRL B-67306, or *Paenibacillus terrae* strain NRRL B-67615 with chemicals or irradiation or by selecting spontaneous mutants from a population of *Paenibacillus terrae* strain NRRL B-50972, *Paenibacillus terrae* strain NRRL B-67129, *Paenibacillus terrae* strain NRRL B-67304, *Paenibacillus terrae* strain NRRL B-67306, or *Paenibacillus terrae* strain NRRL B-67615 cells (such as phage resistant or antibiotic resistant mutants), by genome shuffling, as described below, or by other means well known to those practiced in the art.

Genome shuffling among *Paenibacillus* strains can be facilitated through the use of a process called protoplast fusion. The process begins with the formation of protoplasts from vegetative bacillary cells. The removal of peptidoglycan cell wall, typically using lysozyme and an osmotic stabilizer, results in the formation of a protoplast. This process is visible under a light microscope with the appearance of spherical cells. Addition of polyethylene glycol (PEG), then induces fusion among protoplasts, allowing genetic contents of two or more cells to come in contact facilitating recombination and genome shuffling. Fused cells then repartition and are recovered on a solid growth medium. During recovery, protoplasts rebuild peptidoglycan cell walls, transitioning back to bacillary shape. See Schaeffer, et al., (1976) PNAS USA, vol. 73, 6:2151-2155.

The present invention also encompasses methods of treating a plant to control plant diseases by administering to a plant or a plant part, such as a leaf, stem, flowers, fruit, root, or seed or by applying to a locus on which plant or plant parts grow, such as soil, the disclosed *Paenibacillus* sp. strains or mutants thereof, or cell-free preparations thereof or metabolites thereof as characterized in the claims.

In a method according to the invention a composition containing a disclosed *Paenibacillus* sp. strain or an insecticidal mutant thereof can be applied to any plant or any part of any plant grown in any type of media used to grow plants (e.g., soil, vermiculite, shredded cardboard, and water) or applied to plants or the parts of plants grown aerially, such as orchids or staghorn ferns. The composition may for instance be applied by spraying, atomizing, vaporizing, scattering, dusting, watering, squirting, sprinkling, pouring or fumigating. As already indicated above, application may be carried out at any desired location where the plant of interest is positioned, such as agricultural, horticultural, forest, plantation, orchard, nursery, organically grown crops, turfgrass and urban environments.

Compositions of the present invention can be obtained by culturing the disclosed *Paenibacillus* sp. strains or an insecticidal mutant (strain) derived therefrom according to methods well known in the art, including by using the media and other methods described in the examples below. Conventional large-scale microbial culture processes include submerged fermentation, solid state fermentation, or liquid surface culture. Towards the end of fermentation, as nutrients are depleted, cells begin the transition from growth phase to sporulation phase, such that the final product of fermentation is largely spores, metabolites and residual fermentation medium. Sporulation is part of the natural life cycle of *Paenibacillus* and is generally initiated by the cell in response to nutrient limitation. Fermentation is configured to obtain high levels of colony forming units of and to promote sporulation. The bacterial cells, spores and metabolites in culture media resulting from fermentation may be used directly or concentrated by conventional industrial methods, such as centrifugation, tangential-flow filtration, depth filtration, and evaporation.

Compositions of the present invention include fermentation products. In some embodiments, the concentrated fermentation broth is washed, for example, via a diafiltration process, to remove residual fermentation broth and metabolites. The term "broth concentrate," as used herein, refers to whole broth (fermentation broth) that has been concentrated by conventional industrial methods, as described above, but remains in liquid form. The term "fermentation solid," as used herein, refers to the solid material that remains after the fermentation broth is dried. The term "fermentation product," as used herein, refers to whole broth, broth concentrate and/or fermentation solids. Compositions of the present invention include fermentation products.

The fermentation broth or broth concentrate can be dried with or without the addition of carriers using conventional drying processes or methods such as spray drying, freeze drying, tray drying, fluidized-bed drying, drum drying, or evaporation.

The resulting dry products may be further processed, such as by milling or granulation, to achieve a specific particle size or physical format. Carriers, described below, may also be added post-drying.

Bacterially produced biological chemistries (e.g., insecticidal compounds) may be separated from bacterial cells or further purified from other bacterial components and, from each other. The term "cell-free preparation" refers to a biologically pure culture or fermentation broth from which cells have been removed or substantially removed through means well known to those of skill in the art. Cell-free preparations can be obtained by any means known in the art, including but not limited to extraction, centrifugation and/or filtration of fermentation broth. Those of skill in the art will appreciate that so-called cell-free preparations may not be devoid of cells but rather are largely cell-free or substantially cell-free, depending on the technique used (e.g., speed of centrifugation) to remove the cells. The resulting cell-free preparation may be dried and/or formulated with components that aid in its particular application. Concentration methods and drying techniques described herein for fermentation broth are also applicable to cell-free preparations.

After a cell-free preparation is made by, for example, centrifugation of fermentation broth, the metabolites may be purified by size exclusion filtration including but not limited to the SEPHADEX^{®} resins including LH-20, G10, and G15 and G25 that group metabolites into different fractions based on molecular weight cut-off.

In certain aspects, the fermentation product further comprises a formulation ingredient. The formulation ingredient may be a wetting agent, extender, solvent, spontaneity promoter, emulsifier, dispersant, frost protectant, thickener, and/or an adjuvant. In one embodiment, the formulation ingredient is a wetting agent. In other aspects, the fermentation product is a freeze-dried powder or a spray-dried powder.

Compositions of the present invention may include formulation ingredients added to compositions of the present invention to improve recovery, efficacy, or physical properties and/or to aid in processing, packaging and administration. Such formulation ingredients may be added individually or in combination.

The formulation ingredients may be added to compositions comprising cells, cell-free preparations, isolated compounds, and/or metabolites to improve efficacy, stability, and physical properties, usability and/or to facilitate processing, packaging and end-use application. Such formulation ingredients may include agriculturally acceptable carriers, inerts, stabilization agents, preservatives, nutrients, or physical property modifying agents, which may be added individually or in combination. In some embodiments, the carriers may include liquid materials such as water, oil, and other organic or inorganic solvents and solid materials such as minerals, polymers, or polymer complexes derived biologically or by chemical synthesis. In some embodiments, the formulation ingredient is a binder, adjuvant, or adhesive that facilitates adherence of the composition to a plant part, such as leaves, seeds, or roots. See, for example, Taylor, A.G., et al., "Concepts and Technologies of Selected Seed Treatments," Annu. Rev. Phytopathol., 28: 321-339 (1990). The stabilization agents may include anti-caking agents, antioxidation agents, anti-settling agents, antifoaming agents, desiccants, protectants or preservatives. The nutrients may include carbon, nitrogen, and phosphorus sources such as sugars, polysaccharides, oil, proteins, amino acids, fatty acids and phosphates. The physical property modifiers may include bulking agents, wetting agents, thickeners, pH modifiers, rheology modifiers, dispersants, adjuvants, surfactants, film-formers, hydrotropes, builders, antifreeze agents or colorants. In some embodiments, the composition comprising cells, cell-free preparation and/or metabolites produced by fermentation can be used directly with or without water as the diluent without any other formulation preparation. In a particular embodiment, a wetting agent, or a dispersant, is added to a fermentation solid, such as a freeze-dried or spray-dried powder. In some embodiments, the formulation inerts are added after concentrating fermentation broth and/or during and/or after drying. A wetting agent increases the spreading and penetrating properties, or a dispersant increases the dispersability and solubility of the active ingredient (once diluted) when it is applied to surfaces. Exemplary wetting agents are known to those of skill in the art and include sulfosuccinates and derivatives, such as MULTIWET^{™} MO-70R (Croda Inc., Edison, NJ); siloxanes such as BREAK-THRU^{®} (Evonik, Germany); nonionic compounds, such as ATLOX^{™} 4894 (Croda Inc., Edison, NJ); alkyl polyglucosides, such as TERWET^{®} 3001 (Huntsman International LLC, The Woodlands, Texas); C12-C14 alcohol ethoxylate, such as TERGITOL^{®} 15-S-15 (The Dow Chemical Company, Midland, Michigan); phosphate esters, such as RHODAFAC^{®} BG-510 (Rhodia, Inc.); and alkyl ether carboxylates, such as EMULSOGEN^{™} LS (Clariant Corporation, North Carolina).

In one embodiment, the fermentation product comprises at least about 1 × 10⁴ colony forming units (CFU) of the microorganism (e.g., *Paenibacillus terrae* strain NRRL B-*50972, Paenibacillus terrae* strain NRRL B-67129, *Paenibacillus terrae* strain NRRL B-67304, *Paenibacillus terrae* strain NRRL B-67306, *Paenibacillus terrae* strain NRRL B-67615 or an insecticidal mutant strain thereof)/mL broth. In another embodiment, the fermentation product comprises at least about 1 × 10⁵ colony forming units (CFU) of the microorganism/mL broth. In another embodiment, the fermentation product comprises at least about 1 × 10⁶ CFU of the microorganism/mL broth. In yet another embodiment, the fermentation product comprises at least about 1 × 10⁷ CFU of the microorganism/mL broth. In another embodiment, the fermentation product comprises at least about 1 × 10⁸ CFU of the microorganism/mL broth. In another embodiment, the fermentation product comprises at least about 1 × 10⁹ CFU of the microorganism/mL broth. In another embodiment, the fermentation product comprises at least about 1 × 10¹⁰ CFU of the microorganism/mL broth. In another embodiment, the fermentation product comprises at least about 1 × 10¹¹ CFU of the microorganism/mL broth.

The inventive compositions can be used as such or, depending on their particular physical and/or chemical properties, in the form of their formulations or the use forms prepared therefrom, such as aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, gas (under pressure), gas generating product, foams, pastes, pesticide coated seed, suspension concentrates, oil dispersion, suspo-emulsion concentrates, soluble concentrates, suspensions, wettable powders, soluble powders, dusts and granules, water-soluble and water-dispersible granules or tablets, water-soluble and water-dispersible powders for the treatment of seed, wettable powders, natural products and synthetic substances impregnated with active ingredient, and also microencapsulations in polymeric substances and in coating materials for seed, and also ULV cold-fogging and warm-fogging formulations.

In some embodiments, the inventive compositions are liquid formulations. Non-limiting examples of liquid formulations include suspension concentrations and oil dispersions. In other embodiments, the inventive compositions are solid formulations. Non-limiting examples of liquid formulations include freeze-dried powders and spray-dried powders.

All plants and plant parts can be treated in accordance with the invention. In the present context, plants are understood as meaning all plants and plant populations, such as desired and undesired wild plants or crop plants (including naturally occurring crop plants). Crop plants can be plants which can be obtained by traditional breeding and optimization methods or by biotechnological and recombinant methods, or combinations of these methods, including the transgenic plants and including the plant varieties capable or not of being protected by Plant Breeders' Rights. Plant parts are understood as meaning all aerial and subterranean parts and organs of the plants, such as shoot, leaf, flower and root, examples which may be mentioned being leaves, needles, stalks, stems, flowers, fruiting bodies, fruits and seeds, and also roots, tubers and rhizomes. The plant parts also include crop material and vegetative and generative propagation material, for example cuttings, tubers, rhizomes, slips and seeds.

As has already been mentioned above, all plants and their parts may be treated in accordance with the invention. In one embodiment, plant species and plant varieties, and their parts, which grow wild or which are obtained by traditional biological breeding methods such as hybridization or protoplast fusion are treated. In a further embodiment, transgenic plants and plant varieties which have been obtained by recombinant methods, if appropriate in combination with traditional methods (genetically modified organisms), and their parts are treated. The term "parts" or "parts of plants" or "plant parts" has been explained hereinabove. Plants of the plant varieties which are in each case commercially available or in use are especially preferably treated in accordance with the invention. Plant varieties are understood as meaning plants with novel traits which have been bred both by traditional breeding, by mutagenesis or by recombinant DNA techniques. They may take the form of varieties, races, biotypes and genotypes.

The treatment of the plants and plant parts with the compositions according to the invention is carried out directly or by acting on the environment, habitat or storage space using customary treatment methods, for example by dipping, spraying, atomizing, misting, evaporating, dusting, fogging, scattering, foaming, painting on, spreading, injecting, drenching, trickle irrigation and, in the case of propagation material, in particular in the case of seed, furthermore by the dry seed treatment method, the wet seed treatment method, the slurry treatment method, by encrusting, by coating with one or more coats and the like. It is furthermore possible to apply the active substances by the ultra-low volume method or to inject the active substance preparation or the active substance itself into the soil.

A direct treatment of the plants is the leaf application treatment, i.e., compositions according to the invention are applied to the foliage, it being possible for the treatment frequency and the application rate to be matched to the infection pressure of the pathogen in question.

In the case of systemically active compounds, the compositions according to the invention reach the plants via the root system. In this case, the treatment of the plants is effected by allowing the compositions according to the invention to act on the environment of the plant. This can be done for example by drenching, incorporating in the soil or into the nutrient solution, i.e., the location of the plant (for example the soil or hydroponic systems) is impregnated with a liquid form of the compositions according to the invention, or by soil application, i.e., the compositions according to the invention are incorporated into the location of the plants in solid form (for example in the form of granules). In the case of paddy rice cultures, this may also be done by metering the compositions according to the invention into a flooded paddy field in a solid use form (for example in the form of granules).

Preferred plants are those from the group of the useful plants, ornamentals, turfs, generally used trees which are employed as ornamentals in the public and domestic sectors, and forestry trees. Forestry trees comprise trees for the production of timber, cellulose, paper and products made from parts of the trees.

The term "useful plants" as used in the present context refers to crop plants which are employed as plants for obtaining foodstuffs, feedstuffs, fuels or for industrial purposes.

The useful plants which can be treated and/or improved with the compositions and methods of the present invention include for example the following types of plants: turf, vines, cereals, for example wheat, barley, rye, oats, rice, maize and millet/sorghum; beet, for example sugar beet and fodder beet; fruits, for example pome fruit, stone fruit and soft fruit, for example apples, pears, plums, peaches, almonds, cherries and berries, for example strawberries, raspberries, blackberries; legumes, for example beans, lentils, peas and soybeans; oil crops, for example oilseed rape, mustard, poppies, olives, sunflowers, coconuts, castor oil plants, cacao and peanuts; cucurbits, for example pumpkin/squash, cucumbers and melons; fibre plants, for example cotton, flax, hemp and jute; citrus fruit, for example oranges, lemons, grapefruit and tangerines; vegetables, for example spinach, lettuce, asparagus, cabbage species, carrots, onions, tomatoes, potatoes and bell peppers; Lauraceae, for example avocado, Cinnamomum, camphor, or else plants such as tobacco, nuts, coffee, aubergine, sugar cane, tea, pepper, grapevines, hops, bananas, latex plants and ornamentals, for example flowers, shrubs, deciduous trees and coniferous trees. This enumeration is no limitation.

The following plants are considered to be particularly suitable target crops for applying compositions and methods of the present invention: cotton, aubergine, turf, pome fruit, stone fruit, soft fruit, maize, wheat, barley, cucumber, tobacco, vines, rice, cereals, pear, beans, soybeans, oilseed rape, tomato, bell pepper, melons, cabbage, potato and apple.

The *Paenibacillus terrae* strains according to the invention, in combination with good plant tolerance and favourable toxicity to warm-blooded animals and being tolerated well by the environment, are suitable for protecting plants and plant organs, for increasing harvest yields, for improving the quality of the harvested material and for controlling animal pests, in particular insects, arachnids, helminths, nematodes and molluscs, which are encountered in agriculture, in horticulture, in animal husbandry, in forests, in gardens and leisure facilities, in protection of stored products and of materials, and in the hygiene sector. They can be preferably employed as plant protection agents. They are active against normally sensitive and resistant species and against all or some stages of development. The abovementioned pests include:
pests from the phylum Arthropoda, especially from the class Arachnida, for example *Acarus* spp., *Aceria kuko, Aceria sheldoni, Aculops* spp., *Aculus* spp., *Amblyomma* spp., *Amphitetranychus viennensis, Argas* spp., *Boophilus* spp., *Brevipalpus* spp., *Bryobia graminum, Bryobia praetiosa, Centruroides* spp., *Chorioptes* spp., *Dermanyssus gallinae, Dermatophagoides pteronyssinus, Dermatophagoides farinae, Dermacentor* spp., *Eotetranychus* spp., *Epitrimerus pyri, Eutetranychus* spp., *Eriophyes* spp., *Glycyphagus domesticus, Halotydeus destructor, Hemitarsonemus* spp., *Hyalomma* spp., *Ixodes* spp., *Latrodectus* spp., *Loxosceles* spp., *Metatetranychus* spp., *Neutrombicula autumnalis, Nuphersa* spp., *Oligonychus* spp., *Ornithodorus* spp., *Ornithonyssus* spp., *Panonychus* spp., *Phyllocoptruta oleivora, Platytetranychus multidigituli, Polyphagotarsonemus latus, Psoroptes* spp., *Rhipicephalus* spp., *Rhizoglyphus* spp., *Sarcoptes* spp., *Scorpio maurus, Steneotarsonemus* spp., *Steneotarsonemus spinki, Tarsonemus* spp., *Tetranychus* spp., *Trombicula alfreddugesi, Vaejovis* spp., *Vasates lycopersici;*
from the class Chilopoda, for example, *Geophilus* spp., *Scutigera* spp.;
from the order or the class Collembola, for example, *Onychiurus armatus, Sminthurus viridis;*
from the class Diplopoda, for example, *Blaniulus guttulatus;*
from the class Insecta, e.g., from the order Blattodea, for example *Blatta orientalis, Blattella asahinai, Blattella germanica, Leucophaea maderae, Loboptera decipiens, Neostylopyga rhombifolia, Panchlora* spp., *Parcoblatta* spp., *Periplaneta* spp., *Pycnoscelus surinamensis, Supella longipalpa;*
from the order Coleoptera, for example, *Acalymma vittatum, Acanthoscelides obtectus, Adoretus* spp., *Aethina tumida, Agelastica alni, Agriotes* spp., *Alphitobius diaperinus, Amphimallon solstitialis, Anobium punctatum, Anoplophora* spp., *Anthonomus* spp., *Anthrenus* spp., *Apion* spp., *Apogonia* spp., *Atomaria* spp., *Attagenus* spp., *Baris caerulescens, Bruchidius obtectus, Bruchus* spp., *Cassida* spp., *Cerotoma trifurcata, Ceutorrhynchus* spp., *Chaetocnema* spp., *Cleonus mendicus, Conoderus* spp., *Cosmopolites* spp., *Costelytra zealandica, Ctenicera* spp., *Curculio* spp., *Cryptolestes ferrugineus, Cryptorhynchus lapathi, Cylindrocopturus* spp., *Dermestes* spp., *Diabrotica* spp., *Dichocrocis* spp., *Dicladispa armigera, Diloboderus* spp., *Epicaerus* spp., *Epilachna* spp., *Epitrix* spp., *Faustinus* spp., *Gibbium psylloides, Gnathocerus cornutus, Hellula undalis, Heteronychus arator, Heteronyx* spp., *Hylamorpha elegans, Hylotrupes bajulus, Hypera postica, Hypomeces squamosus, Hypothenemus* spp., *Lachnosterna consanguinea, Lasioderma serricorne, Latheticus oryzae, Lathridius* spp., *Lema* spp., *Leptinotarsa decemlineata, Leucoptera* spp., *Lissorhoptrus oryzophilus, Listronotus (= Hyperodes)* spp., *Lixus* spp., *Luperodes* spp., *Luperomorpha xanthodera, Lyctus* spp., *Megascelis* spp., *Melanotus* spp., *Meligethes aeneus, Melolontha* spp., *Migdolus* spp., *Monochamus* spp., *Naupactus xanthographus, Necrobia* spp., *Neogalerucella* spp., *Niptus hololeucus, Oryctes rhinoceros, Oryzaephilus surinamensis, Oryzaphagus oryzae, Otiorrhynchus* spp., *Oulema* spp., *Oulema melanopus, Oulema oryzae, Oxycetonia jucunda, Phaedon cochleariae, Phyllophaga* spp., *Phyllophaga helleri, Phyllotreta* spp., *Popillia japonica, Premnotrypes* spp., *Prostephanus truncatus, Psylliodes* spp., *Ptinus* spp., *Rhizobius ventralis, Rhizopertha dominica, Rhynchophorus* spp., *Rhynchophorus ferrugineus, Rhynchophorus palmarum, Sinoxylon perforans, Sitophilus* spp., *Sitophilus oryzae, Sphenophorus* spp., *Stegobium paniceum, Sternechus* spp., *Symphyletes* spp., *Tanymecus* spp., *Tenebrio molitor, Tenebrioides mauretanicus, Tribolium* spp., *Trogoderma* spp., *Tychius* spp., *Xylotrechus* spp., *Zabrus* spp.;
from the order Dermaptera, for example *Anisolabis maritime, Forficula auricularia, Labidura riparia;*
from the order Diptera, for example *Aedes* spp., *Agromyza* spp., *Anastrepha* spp., *Anopheles* spp., *Asphondylia* spp., *Bactrocera* spp., *Bibio hortulanus, Calliphora erythrocephala, Calliphora vicina, Ceratitis capitata, Chironomus* spp., *Chrysomya* spp., *Chrysops* spp., *Chrysozona pluvialis, Cochliomyia* spp., *Contarinia* spp., *Cordylobia anthropophaga, Cricotopus sylvestris, Culex* spp., *Culicoides* spp., *Culiseta* spp., *Cuterebra* spp., *Dacus oleae, Dasineura* spp., *Delia* spp., *Dermatobia hominis, Drosophila* spp., *Echinocnemus* spp., *Euleia heraclei, Fannia* spp., *Gasterophilus* spp., *Glossina* spp., *Haematopota* spp., *Hydrellia* spp., *Hydrellia griseola, Hylemya* spp., *Hippobosca* spp., *Hypoderma* spp., *Liriomyza* spp., *Lucilia* spp., *Lutzomyia* spp., *Mansonia* spp., *Musca* spp., *Oestrus* spp., *Oscinella frit, Paratanytarsus* spp., *Paralauterborniella subcincta, Pegomyia or Pegomya* spp., *Phlebotomus* spp., *Phorbia* spp., *Phormia* spp., *Piophila casei, Platyparea poeciloptera, Prodiplosis* spp., *Psila rosae, Rhagoletis* spp., *Sarcophaga* spp., *Simulium* spp., *Stomoxys* spp., *Tabanus* spp., *Tetanops* spp., *Tipula* spp., *Toxotrypana curvicauda;*
from the order Hemiptera, for example, *Acizzia acaciaebaileyanae, Acizzia dodonaeae, Acizzia uncatoides, Acrida turrita, Acyrthosiphon* spp., *Acrogonia* spp., *Aeneolamia* spp., *Agonoscena* spp., *Aleurocanthus* spp., *Aleyrodes proletella, Aleurolobus barodensis, Aleurothrixus floccosus, Allocaridara malayensis, Amrasca* spp., *Anuraphis cardui, Aonidiella* spp., *Aphanostigma piri, Aphis* spp., *Arboridia apicalis, Arytainilla* spp., *Aspidiella* spp., *Aspidiotus* spp., *Atanus* spp., *Aulacorthum solani, Bemisia tabaci, Blastopsylla occidentalis, Boreioglycaspis melaleucae, Brachycaudus helichrysi, Brachycolus* spp., *Brevicoryne brassicae, Cacopsylla* spp., *Calligypona marginata, Capulinia* spp., *Carneocephala fulgida, Ceratovacuna lanigera, Cercopidae, Ceroplastes* spp., *Chaetosiphon fragaefolii, Chionaspis tegalensis, Chlorita onukii, Chondracris rosea, Chromaphis juglandicola, Chrysomphalus aonidum, Chrysomphalus ficus, Cicadulina mbila, Coccomytilus halli, Coccus* spp., *Cryptomyzus ribis, Cryptoneossa* spp., *Ctenarytaina* spp., *Dalbulus* spp., *Dialeurodes chittendeni, Dialeurodes citri, Diaphorina citri, Diaspis* spp., *Diuraphis* spp., *Doralis* spp., *Drosicha* spp., *Dysaphis* spp., *Dysmicoccus* spp., *Empoasca* spp., *Eriosoma* spp., *Erythroneura* spp., *Eucalyptolyma* spp., *Euphyllura* spp., *Euscelis bilobatus, Ferrisia* spp., *Fiorinia* spp., *Furcaspis oceanica, Geococcus coffeae, Glycaspis* spp., *Heteropsylla cubana, Heteropsylla spinulosa, Homalodisca coagulata, Hyalopterus arundinis, Hyalopterus pruni, Icerya* spp., *Idiocerus* spp., *Idioscopus* spp., *Laodelphax striatellus, Lecanium* spp., *Lepidosaphes* spp., *Lipaphis erysimi, Lopholeucaspis japonica, Lycorma delicatula, Macrosiphum* spp., *Macrosteles facifrons, Mahanarva* spp., *Melanaphis sacchari, Metcalfiella* spp., *Metcalfa pruinosa, Metopolophium dirhodum, Monellia costalis, Monelliopsis pecanis, Myzus* spp., *Nasonovia ribisnigri, Neomaskellia* spp., *Nephotettix* spp., *Nettigoniclla spectra, Nilaparvata lugens, Oncometopia* spp., *Orthezia praelonga, Oxya chinensis, Pachypsylla* spp., *Parabemisia myricae, Paratrioza* spp., *Parlatoria* spp., *Pemphigus* spp., *Peregrinus maidis, Perkinsiella* spp., *Phenacoccus* spp., *Phloeomyzus passerinii, Phorodon humuli, Phylloxera* spp., *Pinnaspis aspidistrae, Planococcus* spp., *Prosopidopsylla flava, Protopulvinaria pyriformis, Pseudaulacaspis pentagona, Pseudococcus* spp., *Psyllopsis* spp., *Psylla* spp., *Pteromalus* spp., *Pulvinaria* spp., *Pyrilla* spp., *Quadraspidiotus* spp., *Quesada gigas, Rastrococcus* spp., *Rhopalosiphum* spp., *Saissetia* spp., *Scaphoideus titanus, Schizaphis graminum, Selenaspidus articulatus, Sitobion avenae, Sogata* spp., *Sogatella furcifera, Sogatodes* spp., *Stictocephala festina, Siphoninus phillyreae, Tenalaphara malayensis, Tetragonocephela* spp., *Tinocallis caryaefoliae, Tomaspis* spp., *Toxoptera* spp., *Trialeurodes vaporariorum, Trioza* spp., *Typhlocyba* spp., *Unaspis* spp., *Viteus vitifolii, Zygina* spp.;
from the suborder Heteroptera, for example, *Aelia* spp., *Anasa tristis, Antestiopsis* spp., *Boisea* spp., *Blissus* spp., *Calocoris* spp., *Campylomma livida, Cavelerius* spp., *Cimex* spp., *Collaria* spp., *Creontiades dilutus, Dasynus piperis, Dichelops furcatus, Diconocoris hewetti, Dysdercus* spp., *Euschistus* spp., *Eurydema* spp., *Eurygaster* spp., *Halyomorpha halys, Heliopeltis* spp., *Horcias nobilellus, Leptocorisa* spp., *Leptocorisa varicornis, Leptoglossus occidentalis, Leptoglossus phyllopus, Lygocoris* spp., *Lygus* spp., *Macropes excavatus, Megacopta cribraria, Miridae, Monalonion atratum, Nezara* spp., *Nysius* spp., *Oebalus* spp., *Pentomidae, Piesma quadrata, Piezodorus* spp., *Psallus* spp., *Pseudacysta persea, Rhodnius* spp., *Sahlbergella singularis, Scaptocoris castanea, Scotinophora* spp., *Stephanitis nashi, Tibraca* spp., *Triatoma* spp.;
from the order Hymenoptera, for example, *Acromyrmex* spp., *Athalia* spp., *Atta* spp., *Camponotus* spp., *Dolichovespula* spp., *Diprion* spp., *Hoplocampa* spp., *Lasius* spp., *Linepithema (Iridiomyrmex) humile, Monomorium pharaonis, Paratrechina* spp., *Paravespula* spp., *Plagiolepis* spp., *Sirex* spp., *Solenopsis invicta, Tapinoma* spp., *Technomyrmex albipes, Urocerus* spp., *Vespa* spp., *Wasmannia auropunctata, Xeris* spp.;
from the order Isopoda, for example, *Armadillidium vulgare, Oniscus asellus, Porcellio scaber;*
from the order Isoptera, for example, *Coptotermes* spp., *Cornitermes cumulans, Cryptotermes* spp., *Incisitermes* spp., *Kalotermes* spp., *Microtermes obesi, Nasutitermes* spp., *Odontotermes* spp., *Porotermes* spp., *Reticulitermes* spp.;
from the order Lepidoptera, for example, *Achroia grisella, Acronicta major, Adoxophyes* spp., *Aedia leucomelas, Agrotis* spp., *Alabama* spp., *Amyelois transitella, Anarsia* spp., *Anticarsia* spp., *Argyroploce* spp., *Autographa* spp., *Barathra brassicae, Blastodacna atra, Borbo cinnara, Bucculatrix thurberiella, Bupalus piniarius, Busseola* spp., *Cacoecia* spp., *Caloptilia theivora, Capua reticulana, Carpocapsa pomonella, Carposina niponensis, Cheimatobia brumata, Chilo* spp., *Choreutis pariana, Choristoneura* spp., *Chrysodeixis chalcites, Clysia ambiguella, Cnaphalocerus* spp., *Cnaphalocrocis medinalis, Cnephasia* spp., *Conopomorpha* spp., *Conotrachelus* spp., *Copitarsia* spp., *Cydia* spp., *Dalaca noctuides, Diaphania* spp., *Diparopsis* spp., *Diatraea saccharalis, Earias* spp., *Ecdytolopha aurantium, Elasmopalpus lignosellus, Eldana saccharina, Ephestia* spp., *Epinotia* spp., *Epiphyas postvittana, Erannis* spp., *Erschoviella musculana, Etiella* spp., *Eudocima* spp., *Eulia* spp., *Eupoecilia ambiguella, Euproctis* spp., *Euxoa* spp., *Feltia* spp., *Galleria mellonella, Gracillaria* spp., *Grapholitha* spp., *Hedylepta* spp., *Helicoverpa* spp., *Heliothis* spp., *Hofmannophila pseudospretella, Homoeosoma* spp., *Homona* spp., *Hyponomeuta padella, Kakivoria flavofasciata, Lampides* spp., *Laphygma* spp., *Laspeyresia molesta, Leucinodes orbonalis, Leucoptera* spp., *Lithocolletis* spp., *Lithophane antennata, Lobesia* spp., *Loxagrotis albicosta, Lymantria* spp., *Lyonetia* spp., *Malacosoma neustria, Maruca testulalis, Mamestra brassicae, Melanitis leda, Mocis* spp., *Monopis obviella, Mythimna separata, Nemapogon cloacellus, Nymphula* spp., *Oiketicus* spp., *Omphisa* spp., *Operophtera* spp., *Oria* spp., *Orthaga* spp., *Ostrinia* spp., *Panolis flammea, Parnara* spp., *Pectinophora* spp., *Perileucoptera* spp., *Phthorimaea* spp., *Phyllocnistis citrella, Phyllonorycter* spp., *Pieris* spp., *Platynota stultana, Plodia interpunctella, Plusia* spp., *Plutella xylostella (= Plutella maculipennis), Prays* spp., *Prodenia* spp., *Protoparce* spp., *Pseudaletia* spp., *Pseudaletia unipuncta, Pseudoplusia includens, Pyrausta nubilalis, Rachiplusia nu, Schoenobius* spp., *Scirpophaga* spp., *Scirpophaga innotata, Scotia segetum, Sesamia* spp., *Sesamia inferens, Sparganothis* spp., *Spodoptera* spp., *Spodoptera praefica, Stathmopoda* spp., *Stenoma* spp., *Stomopteryx subsecivella, Synanthedon* spp., *Tecia solanivora, Thaumetopoea* spp., *Thermesia gemmatalis, Tinea cloacella, Tinea pellionella, Tineola bisselliella, Tortrix* spp., *Trichophaga tapetzella, Trichoplusia* spp., *Tryporyza incertulas, Tuta absoluta, Virachola* spp.;
from the order Orthoptera or Saltatoria, for example, *Acheta domesticus, Dichroplus* spp., *Gryllotalpa* spp., *Hieroglyphus* spp., *Locusta* spp., *Melanoplus* spp., *Paratlanticus ussuriensis, Schistocerca gregaria;*
from the order Phthiraptera, for example *Damalinia* spp., *Haematopinus* spp., *Linognathus* spp., *Pediculus* spp., *Phylloxera vastatrix, Phthirus pubis, Trichodectes* spp.;
from the order Psocoptera, for example *Lepinotus* spp., *Liposcelis* spp.;
from the order Siphonaptera, for example *Ceratophyllus* spp., *Ctenocephalides* spp., *Pulex irritans, Tunga penetrans, Xenopsylla cheopis;*
from the order Thysanoptera, for example *Anaphothrips obscurus, Baliothrips biformis, Chaetanaphothrips leeuweni, Drepanothrips reuteri, Enneothrips flavens, Frankliniella* spp., *Haplothrips* spp., *Heliothrips* spp., *Hercinothrips femoralis, Kakothrips* spp., *Rhipiphorothrips cruentatus, Scirtothrips* spp., *Taeniothrips cardamomi, Thrips* spp.;
from the order Zygentoma (= Thysanura), for example *Ctenolepisma* spp., *Lepisma saccharina, Lepismodes inquilinus, Thermobia domestica;*
from the class Symphyla, for example, *Scutigerella* spp.;
pests from the phylum Mollusca, especially from the class Bivalvia, for example, *Dreissena* spp.,
and from the class Gastropoda, for example, *Arion* spp., *Biomphalaria* spp., *Bulinus* spp., *Deroceras* spp., *Galba* spp., *Lymnaea* spp., *Oncomelania* spp., *Pomacea* spp., *Succinea* spp.;
animal pests from the phyla Platyhelminthes and Nematoda, for example *Aelurostrongylus* spp., *Amidostomum* spp., *Ancylostoma duodenale, Ancylostoma ceylanicum, Acylostoma braziliensis, Ancylostoma* spp., *Angiostrongylus* spp., *Anisakis* spp., *Anoplocephala* spp., *Ascaris* spp., *Ascaridia* spp., *Baylisascaris* spp., *Brugia malayi, Brugia timori, Bunostomum* spp., *Capillaria* spp., *Chabertia* spp., *Clonorchis* spp., *Cooperia* spp., *Crenosoma* spp., *Cyathostoma* spp., *Dicrocoelium* spp., *Dictyocaulus filaria, Diphyllobothrium latum, Dipylidium* spp., *Dirofilaria* spp., *Dracunculus medinensis, Echinococcus granulosus, Echinococcus multilocularis, Enterobius vermicularis, Eucoleus* spp., *Fasciola* spp., *Fascioloides* spp., *Fasciolopsis* spp., *Filaroides* spp., *Gongylonema* spp., *Gyrodactylus* spp., *Habronema* spp., *Haemonchus* spp., *Heligmosomoides* spp., *Heterakis* spp., *Hymenolepis nana, Hyostrongulus* spp., *Litomosoides* spp., *Loa Loa, Metastrongylus* spp., *Metorchis* spp., *Mesocestoides* spp., *Moniezia* spp., *Muellerius* spp., *Necator* spp., *Nematodirus* spp., *Nippostrongylus* spp., *Oesophagostomum* spp., *Ollulanus* spp., *Onchocerca volvulus, Opisthorchis* spp., *Oslerus* spp., *Ostertagia* spp., *Oxyuris* spp., *Paracapillaria* spp., *Parafilaria* spp., *Paragonimus* spp., *Paramphistomum* spp., *Paranoplocephala* spp., *Parascaris* spp., *Passalurus* spp., *Protostrongylus* spp., *Schistosoma* spp., *Setaria* spp., *Spirocerca* spp., *Stephanofilaria* spp., *Stephanurus* spp., *Strongyloides fuelleborni, Strongyloides stercoralis, Strongylus* spp., *Syngamus* spp., *Taenia saginata, Taenia solium, Teladorsagia* spp., *Thelazia* spp., *Toxascaris* spp., *Toxocara* spp., *Trichinella spiralis, Trichinella nativa, Trichinella britovi, Trichinella nelsoni, Trichinella pseudopsiralis, Trichobilharzia* spp., *Trichostrongylus* spp., *Trichuris trichuria, Uncinaria* spp., *Wuchereria bancrofti;*
phytoparasitic pests from the phylum Nematoda, for example, *Aglenchus* spp., *Anguina* spp., *Aphelenchoides* spp., *Belonolaimus* spp., *Bursaphelenchus* spp., *Cacopaurus* spp., *Criconemella* spp., *Criconemoides* spp., *Ditylenchus* spp., *Dolichodorus* spp., *Globodera* spp., *Helicotylenchus* spp., *Hemicriconemoides* spp., *Hemicycliophora* spp., *Heterodera* spp., *Hoplolaimus* spp., *Longidorus* spp., *Meloidogyne* spp., *Meloinema* spp., *Nacobbus* spp., *Neotylenchus* spp., *Paralongidorus* spp., *Paraphelenchus* spp., *Paratrichodorus* spp., *Pratylenchus* spp., *Pseudohalenchus* spp., *Psilenchus* spp., *Punctodera* spp., *Quinisulcius* spp., *Radopholus* spp., *Rotylenchulus* spp., *Rotylenchus* spp., *Scutellonema* spp., *Subanguina* spp., *Trichodorus* spp., *Tylenchulus* spp., *Tylenchorhynchus* spp., *Xiphinema* spp.

The fact that the compositions are well tolerated by plants at the concentrations required for controlling plant diseases and pests allows the treatment of above-ground parts of plants, of propagation stock and seeds, and of the soil.

According to the invention all plants and plant parts can be treated including cultivars and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods.

The inventive compositions, when they are well tolerated by plants, have favorable homeotherm toxicity and are well tolerated by the environment, are suitable for protecting plants and plant organs, for enhancing harvest yields, for improving the quality of the harvested material. They can preferably be used as crop protection compositions. They are active against normally sensitive and resistant species and against all or some stages of development.

Plants which can be treated in accordance with the invention include the following main crop plants: maize, soya bean, alfalfa, cotton, sunflower, *Brassica* oil seeds such as *Brassica napus* (e.g., canola, rapeseed), *Brassica rapa, B. juncea* (e.g., (field) mustard) and *Brassica carinata, Arecaceae* sp. (e.g., oilpalm, coconut), rice, wheat, sugar beet, sugar cane, oats, rye, barley, millet and sorghum, triticale, flax, nuts, grapes and vine and various fruit and vegetables from various botanic taxa, e.g., *Rosaceae* sp. (e.g., pome fruits such as apples and pears, but also stone fruits such as apricots, cherries, almonds, plums and peaches, and berry fruits such as strawberries, raspberries, red and black currant and gooseberry), *Ribesioidae* sp., *Juglandaceae* sp., *Betulaceae* sp., *Anacardiaceae* sp., *Fagaceae* sp., *Moraceae* sp., *Oleaceae sp.* (e.g., olive tree), *Actinidaceae* sp., *Lauraceae* sp. (e.g., avocado, cinnamon, camphor), *Musaceae* sp. (e.g., banana trees and plantations), *Rubiaceae* sp. (e.g., coffee), *Theaceae* sp. (e.g., tea), *Sterculiceae* sp., *Rutaceae* sp. (e.g., lemons, oranges, mandarins and grapefruit); *Solanaceae* sp. (e.g., tomatoes, potatoes, peppers, capsicum, aubergines, tobacco), *Liliaceae* sp., *Compositae* sp. (e.g., lettuce, artichokes and chicory - including root chicory, endive or common chicory), *Umbelliferae* sp. (e.g., carrots, parsley, celery and celeriac), *Cucurbitaceae* sp. (e.g., cucumbers - including gherkins, pumpkins, watermelons, calabashes and melons), *Alliaceae* sp. (e.g., leeks and onions), *Cruciferae* sp. (e.g., white cabbage, red cabbage, broccoli, cauliflower, Brussels sprouts, pak choi, kohlrabi, radishes, horseradish, cress and chinese cabbage), *Leguminosae* sp. (e.g., peanuts, peas, lentils and beans - e.g., common beans and broad beans), *Chenopodiaceae* sp. (e.g., Swiss chard, fodder beet, spinach, beetroot), *Linaceae* sp. (e.g., hemp), *Cannabeacea* sp. (e.g., cannabis), *Malvaceae* sp. (e.g., okra, cocoa), *Papaveraceae* (e.g., poppy), *Asparagaceae* (e.g., asparagus); useful plants and ornamental plants in the garden and woods including turf, lawn, grass and *Stevia rebaudiana;* and in each case genetically modified types of these plants.

Examples of trees which can be improved in accordance with the method according to the invention are: *Abies* sp., *Eucalyptus* sp., *Picea* sp., *Pinus* sp., *Aesculus* sp., *Platanus* sp., *Tilia* sp., *Acer* sp., *Tsuga* sp., *Fraxinus* sp., *Sorbus* sp., *Betula* sp., *Crataegus* sp., *Ulmus* sp., *Quercus* sp., *Fagus* sp., *Salix* sp., *Populus* sp.

In one embodiment, trees which can be improved in accordance with the method according to the invention are: from the tree species *Aesculus: A. hippocastanum, A. pariflora, A. carnea;* from the tree species *Platanus: P. aceriflora, P. occidentalis, P. racemosa;* from the tree species *Picea: P. abies;* from the tree species *Pinus: P. radiata, P. ponderosa, P. contorta, P. sylvestre, P. elliottii, P. montecola, P. albicaulis, P. resinosa, P. palustris, P. taeda, P. flexilis, P. jeffregi, P. baksiana, P. strobus;* from the tree species *Eucalyptus: E. grandis, E. globulus, E. camadentis, E. nitens, E. obliqua, E. regnans, E. pilularus.*

In another embodiment, trees which can be improved in accordance with the method according to the invention are: from the tree species *Pinus: P. radiata, P. ponderosa, P. contorta, P. sylvestre, P. strobus;* from the tree species *Eucalyptus: E. grandis, E. globulus, E. camadentis.*

In yet another embodiment, trees which can be improved in accordance with the method according to the invention are: horse chestnut, Platanaceae, linden tree, maple tree.

The present invention can also be applied to any turf grasses, including cool-season turf grasses and warm-season turf grasses. Examples of cold-season turf grasses are bluegrasses *(Poa* spp.), such as Kentucky bluegrass *(Poa pratensis* L.), rough bluegrass *(Poa trivialis* L.), Canada bluegrass *(Poa compressa* L.), annual bluegrass *(Poa annua* L.), upland bluegrass *(Poa glaucantha Gaudin),* wood bluegrass *(Poa nemoralis* L.) and bulbous bluegrass *(Poa bulbosa* L.); bentgrasses *(Agrostis* spp.) such as creeping bentgrass *(Agrostis palustris* Huds.), colonial bentgrass (*Agrostis tenuis* Sibth.), velvet bentgrass (*Agrostis canina* L.), South German mixed bentgrass (*Agrostis* spp. including *Agrostis tenuis* Sibth., *Agrostis canina* L., and *Agrostis palustris* Huds.), and redtop (*Agrostis alba L*.);
fescues (*Festuca* spp.), such as red fescue (*Festuca rubra* L. spp. *rubra*), creeping fescue (*Festuca rubra* L.), chewings fescue (*Festuca rubra commutata* Gaud.), sheep fescue (*Festuca ovina* L.), hard fescue (*Festuca longifolia* Thuill.), hair fescue (*Festucu capillata* Lam.), tall fescue (*Festuca arundinacea* Schreb.) and meadow fescue (*Festuca elanor L*.);
ryegrasses (*Lolium* spp.), such as annual ryegrass (*Lolium multiflorum* Lam.), perennial ryegrass (*Lolium perenne* L.) and Italian ryegrass (*Lolium multiflorum* Lam.);
and wheatgrasses (*Agropyron* spp.), such as fairway wheatgrass (*Agropyron cristatum* (L.) Gaertn.), crested wheatgrass (*Agropyron desertorum* (Fisch.) Schult.) and western wheatgrass (*Agropyron smithii* Rydb.)
Examples of further cool-season turf grasses are beachgrass (*Ammophila breviligulata* Fern.), smooth bromegrass (*Bromus inermis* Leyss.), cattails such as timothy (*Phleum pratense* L.), sand cattail (*Phleum subulatum* L.), orchardgrass (*Dactylis glomerata L*.), weeping alkaligrass (*Puccinellia distans* (L.) Parl.) and crested dog's-tail (*Cynosurus cristatus L*.)
Examples of warm-season turf grasses are Bermuda grass (*Cynodon* spp. L. C. Rich), zoysia grass (*Zoysia* spp. Willd.), St. Augustine grass (*Stenotaphrum secundatum* Walt Kuntze), centipede grass (*Eremochloa ophiuroides* Munro Hack.), carpetgrass (*Axonopus affinis* Chase), Bahia grass (*Paspalum notatum* Flugge), Kikuyu grass (*Pennisetum clandestinum* Hochst. ex Chiov.), buffalo grass (*Buchloe dactyloids* (Nutt.) Engelm.), blue grama (*Bouteloua gracilis* (H.B.K.) Lag. ex Griffiths), seashore paspalum (*Paspalum vaginatum* Swartz) and sideoats grama (*Bouteloua curtipendula* (Michx. Torr.). Cool-season turf grasses are generally preferred for the use according to the invention. Especially preferred are bluegrass, benchgrass and redtop, fescues and ryegrasses. Bentgrass is especially preferred.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e., said plants have a better defense against animal and microbial pests, such as against nematodes, insects, mites, phytopathogenic fungi, bacteria, viruses and/or viroids.

Plants and plant cultivars which may also be treated according to the invention are those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients or shade avoidance.

Plants and plant cultivars which may also be treated according to the invention, are those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore by affected by improved plant architecture (under stress and non-stress conditions), including early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content, protein content, oil content and composition, nutritional value, reduction in anti-nutritional compounds, improved processability and better storage stability.

Plants that may be treated according to the invention are hybrid plants that already express the characteristic of heterosis or hybrid vigor which results in generally higher yield, vigor, health and resistance towards biotic and abiotic stress factors. Such plants are typically made by crossing an inbred male-sterile parent line (the female parent) with another inbred male-fertile parent line (the male parent). Hybrid seed is typically harvested from the male sterile plants and sold to growers. Male sterile plants can sometimes (e.g., in corn) be produced by detasseling, (i.e., the mechanical removal of the male reproductive organs or male flowers) but, more typically, male sterility is the result of genetic determinants in the plant genome. In that case, and especially when seed is the desired product to be harvested from the hybrid plants, it is typically useful to ensure that male fertility in the hybrid plants, which contain the genetic determinants responsible for male sterility, is fully restored. This can be accomplished by ensuring that the male parents have appropriate fertility restorer genes which are capable of restoring the male fertility in hybrid plants that contain the genetic determinants responsible for male sterility. Genetic determinants for male sterility may be located in the cytoplasm. Examples of cytoplasmic male sterility (CMS) were for instance described in *Brassica* species. However, genetic determinants for male sterility can also be located in the nuclear genome. Male sterile plants can also be obtained by plant biotechnology methods such as genetic engineering. A particularly useful means of obtaining male sterile plants is described in WO 89/10396 in which, for example, a ribonuclease such as barnase is selectively expressed in the tapetum cells in the stamens. Fertility can then be restored by expression in the tapetum cells of a ribonuclease inhibitor such as barstar.

Plants or plant cultivars (obtained by plant biotechnology methods such as genetic engineering) which may be treated according to the invention are herbicide-tolerant plants, i.e., plants made tolerant to one or more given herbicides. Such plants can be obtained either by genetic transformation, or by selection of plants containing a mutation imparting such herbicide tolerance.

Herbicide-tolerant plants are for example glyphosate-tolerant plants, i.e., plants made tolerant to the herbicide glyphosate or salts thereof. For example, glyphosate-tolerant plants can be obtained by transforming the plant with a gene encoding the enzyme 5-enolpyruvylshikimate-3-phosphate synthase (EPSPS). Examples of such EPSPS genes are the AroA gene (mutant CT7) of the bacterium *Salmonella typhimurium,* the CP4 gene of the bacterium *Agrobacterium* sp., the genes encoding a petunia EPSPS, a tomato EPSPS, or an Eleusine EPSPS. It can also be a mutated EPSPS. Glyphosate-tolerant plants can also be obtained by expressing a gene that encodes a glyphosate oxido-reductase enzyme. Glyphosate-tolerant plants can also be obtained by expressing a gene that encodes a glyphosate acetyl transferase enzyme. Glyphosate-tolerant plants can also be obtained by selecting plants containing naturally-occurring mutations of the above-mentioned genes.

Other herbicide resistant plants are for example plants that are made tolerant to herbicides inhibiting the enzyme glutamine synthase, such as bialaphos, phosphinothricin or glufosinate. Such plants can be obtained by expressing an enzyme detoxifying the herbicide or a mutant glutamine synthase enzyme that is resistant to inhibition. One such efficient detoxifying enzyme is, for example, an enzyme encoding a phosphinothricin acetyltransferase (such as the bar or pat protein from *Streptomyces* species). Plants expressing an exogenous phosphinothricin acetyltransferase.

Further herbicide-tolerant plants are also plants that are made tolerant to the herbicides inhibiting the enzyme hydroxyphenylpyruvatedioxygenase (HPPD). Hydroxyphenylpyruvatedioxygenases are enzymes that catalyze the reaction in which parahydroxyphenylpyruvate (HPP) is transformed into homogentisate. Plants tolerant to HPPD-inhibitors can be transformed with a gene encoding a naturally-occurring resistant HPPD enzyme, or a gene encoding a mutated HPPD enzyme. Tolerance to HPPD-inhibitors can also be obtained by transforming plants with genes encoding certain enzymes enabling the formation of homogentisate despite the inhibition of the native HPPD enzyme by the HPPD-inhibitor. Tolerance of plants to HPPD inhibitors can also be improved by transforming plants with a gene encoding an enzyme prephenate dehydrogenase in addition to a gene encoding an HPPD-tolerant enzyme.

Still further herbicide resistant plants are plants that are made tolerant to acetolactate synthase (ALS) inhibitors. Known ALS-inhibitors include, for example, sulfonylurea, imidazolinone, triazolopyrimidines, pyrimidinyloxy(thio)benzoates, and/or sulfonylaminocarbonyltriazolinone herbicides. Different mutations in the ALS enzyme (also known as acetohydroxyacid synthase, AHAS) are known to confer tolerance to different herbicides and groups of herbicides. The production of sulfonylurea-tolerant plants and imidazolinone-tolerant plants has been described. Other imidazolinone-tolerant plants have also been described. Further sulfonylurea- and imidazolinone-tolerant plants have also been described.

Other plants tolerant to imidazolinone and/or sulfonylurea can be obtained by induced mutagenesis, selection in cell cultures in the presence of the herbicide or mutation breeding as described for example for soya beans, for rice, for sugar beet, for lettuce or for sunflower.

Plants or plant cultivars (obtained by plant biotechnology methods such as genetic engineering) which may also be treated according to the invention are insect-resistant transgenic plants, i.e., plants made resistant to attack by certain target insects. Such plants can be obtained by genetic transformation, or by selection of plants containing a mutation imparting such insect resistance.

An "insect-resistant transgenic plant", as used herein, includes any plant containing at least one transgene comprising a coding sequence encoding:
1) an insecticidal crystal protein from *Bacillus thuringiensis* or an insecticidal portion thereof, such as the insecticidal crystal proteins listed by Crickmore et al., Microbiology and Molecular Biology Reviews (1998), 62, 807-813, updated by Crickmore et al. (2005) in the Bacillus thuringiensis toxin nomenclature, online at: http://www.lifesci.sussex.ac.uk/Home/Neil_Crickmore/Bt/), or insecticidal portions thereof, e.g., proteins of the Cry protein classes Cry1Ab, Cry1Ac, Cry1F, Cry2Ab, Cry3Ae, or Cry3Bb or insecticidal portions thereof; or
2) a crystal protein from *Bacillus thuringiensis* or a portion thereof which is insecticidal in the presence of a second other crystal protein from *Bacillus thuringiensis* or a portion thereof, such as the binary toxin made up of the Cy34 and Cy35 crystal proteins; or
3) a hybrid insecticidal protein comprising parts of two different insecticidal crystal proteins from *Bacillus thuringiensis,* such as a hybrid of the proteins of 1) above or a hybrid of the proteins of 2) above, e.g., the Cry1A.105 protein produced by corn event MON98034; or
4) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes induced into the encoding DNA during cloning or transformation, such as the Cry3Bb1 protein in corn events MON863 or MON88017, or the Cry3A protein in corn event MIR604; or
5) an insecticidal secreted protein from *Bacillus thuringiensis* or *Bacillus cereus,* or an insecticidal portion thereof, such as the vegetative insecticidal proteins (VIP) listed at: http://www.lifesci.sussex.ac.uk/home/Neil_Crickmore/Bt/vip.html, e.g., proteins from the VIP3Aa protein class; or
6) a secreted protein from *Bacillus thuringiensis* or *Bacillus cereus* which is insecticidal in the presence of a second secreted protein from *Bacillus thuringiensis* or *B. cereus,* such as the binary toxin made up of the VIPla and VIP2A proteins; or
7) a hybrid insecticidal protein comprising parts from different secreted proteins from *Bacillus thuringiensis* or *Bacillus cereus,* such as a hybrid of the proteins in 1) above or a hybrid of the proteins in 2) above; or
8) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes induced into the encoding DNA during cloning or transformation (while still encoding an insecticidal protein), such as the VIP3Aa protein in cotton event COT102.

Of course, insect-resistant transgenic plants, as used herein, also include any plant comprising a combination of genes encoding the proteins of any one of the above classes 1 to 8. In one embodiment, an insect-resistant plant contains more than one transgene encoding a protein of any one of the above classes 1 to 8, to expand the range of target insect species affected or to delay insect resistance development to the plants, by using different proteins insecticidal to the same target insect species but having a different mode of action, such as binding to different receptor binding sites in the insect.

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance. Particularly useful stress tolerance plants include:
a. plants which contain a transgene capable of reducing the expression and/or the activity of poly(ADP-ribose)polymerase (PARP) gene in the plant cells or plants;
b. plants which contain a stress tolerance enhancing transgene capable of reducing the expression and/or the activity of the PARG encoding genes of the plants or plants cells;
c. plants which contain a stress tolerance enhancing transgene coding for a plant-functional enzyme of the nicotinamide adenine dinucleotide salvage biosynthesis pathway, including nicotinamidase, nicotinate phosphoribosyltransferase, nicotinic acid mononucleotide adenyl transferase, nicotinamide adenine dinucleotide synthetase or nicotine amide phosphoribosyltransferase.

Plants or plant cultivars (obtained by plant biotechnology methods such as genetic engineering) which may also be treated according to the invention show altered quantity, quality and/or storage-stability of the harvested product and/or altered properties of specific ingredients of the harvested product such as:
1) transgenic plants which synthesize a modified starch, which in its physical-chemical characteristics, in particular the amylose content or the amylose/amylopectin ratio, the degree of branching, the average chain length, the side chain distribution, the viscosity behavior, the gelling strength, the starch grain size and/or the starch grain morphology, is changed in comparison with the synthesized starch in wild type plant cells or plants, so that this modified starch is better suited for special applications. Said transgenic plants synthesizing a modified starch have been described.
2) transgenic plants which synthesize non-starch carbohydrate polymers or which synthesize non starch carbohydrate polymers with altered properties in comparison to wild type plants without genetic modification. Examples are plants which produce polyfructose, especially of the inulin and levan-type, plants which produce alpha-1,4-glucans, plants which produce alpha-1,6 branched alpha-1,4-glucans, and plants producing alternan.
3) transgenic plants which produce hyaluronan.

Plants or plant cultivars (that can be obtained by plant biotechnology methods such as genetic engineering) which may also be treated according to the invention are plants, such as cotton plants, with altered fibre characteristics. Such plants can be obtained by genetic transformation, or by selection of plants containing a mutation imparting such altered fibre characteristics and include:
a. plants, such as cotton plants which contain an altered form of cellulose synthase genes;
b. plants, such as cotton plants which contain an altered form of rsw2 or rsw3 homologous nucleic acids;
c. plants, such as cotton plants, with an increased expression of sucrose phosphate synthase;
d. plants, such as cotton plants, with an increased expression of sucrose synthase;
e. plants, such as cotton plants, wherein the timing of the plasmodesmatal gating at the basis of the fibre cell is altered, e.g., through downregulation of fibre-selective β-1,3-glucanase;
f. plants, such as cotton plants, which have fibres with altered reactivity, e.g., through the expression of N-acetylglucosaminetransferase gene including nodC and chitin synthase genes.

Plants or plant cultivars (that can be obtained by plant biotechnology methods such as genetic engineering) which may also be treated according to the invention are plants, such as oilseed rape or related *Brassica* plants, with altered oil profile characteristics. Such plants can be obtained by genetic transformation or by selection of plants containing a mutation imparting such altered oil characteristics and include:
a. plants, such as oilseed rape plants, which produce oil having a high oleic acid content;
b. plants, such as oilseed rape plants, which produce oil having a low linolenic acid content;
c. plant such as oilseed rape plants, which produce oil having a low level of saturated fatty acids.

Particularly useful transgenic plants which may be treated according to the invention are plants which comprise one or more genes which encode one or more toxins, are the following which are sold under the trade names YIELD GARD^{®} (for example maize, cotton, soya beans), KNOCKOUT^{®} (for example maize), BITEGARD^{®} (for example maize), BT-XTRA^{®} (for example maize), STARLINK^{®} (for example maize), BOLLGARD^{®} (cotton), NUCOTN^{®} (cotton), NUCOTN 33B° (cotton), NATUREGARD^{®} (for example maize), PROTECTA^{®} and NEWLEAF^{®} (potato). Examples of herbicide-tolerant plants which may be mentioned are maize varieties, cotton varieties and soya bean varieties which are sold under the trade names ROUNDUP READY^{®} (tolerance to glyphosate, for example maize, cotton, soya beans), LIBERTY LINK^{®} (tolerance to phosphinothricin, for example oilseed rape), IMI^{®} (tolerance to imidazolinone) and SCS^{®} (tolerance to sulphonylurea, for example maize). Herbicide-resistant plants (plants bred in a conventional manner for herbicide tolerance) which may be mentioned include the varieties sold under the name CLEARFIELD^{®} (for example maize).

Particularly useful transgenic plants which may be treated according to the invention are plants containing transformation events, or a combination of transformation events, that are listed for example in the databases for various national or regional regulatory agencies.

The compositions according to the invention are particularly suitable for the treatment of seed. A large proportion of the damage to crop plants which is caused by pests is already generated by infestation of the seed while the seed is stored and after the seed is introduced into the soil, and during and immediately after germination of the plants. This phase is particularly critical since the roots and shoots of the growing plant are particularly sensitive and even a small amount of damage can lead to the death of the whole plant. There is therefore in particular a great interest in protecting the seed and the germinating plant by using suitable compositions.

The control of pests by treating the seed of plants has been known for a long time and is the subject of continuous improvements. However, the treatment of seed poses a series of problems which cannot always be solved in a satisfactory manner. Thus, it is desirable to develop methods of protecting the seed and the germinating plant which dispense with the additional application of plant protection compositions after sowing or after the emergence of the plants. It is furthermore desirable to optimize the amount of the compositions employed in such a way as to provide the best possible protection for the seed and the germinating plant against attack by pests. In particular, methods for the treatment of seed should also include the intrinsic fungicidal and/or insecticidal properties of transgenic plants in order to achieve an optimal protection of the seed and of the germinating plant while keeping the application rate of plant protection compositions as low as possible.

The present invention therefore particularly also relates to a method of protecting seed and germinating plants from attack by pests by treating the seed with a composition according to the invention as characterized in the claims.

In certain aspects, the compositions of the present invention are applied at about 1 × 10⁴ to about 1 × 10¹⁴ colony forming units (CFU) per hectare, at about 1 × 10⁴ to about 1 × 10¹² colony forming units (CFU) per hectare, at about 1 × 10⁴ to about 1 × 10¹⁰ colony forming units (CFU) per hectare, at about 1 × 10⁴ to about 1 × 10⁸ colony forming units (CFU) per hectare, at about 1 × 10⁶ to about 1 × 10¹⁴ colony forming units (CFU) per hectare, at about 1 × 10⁶ to about 1 × 10¹² colony forming units (CFU) per hectare, at about 1 × 10⁶ to about 1 × 10¹⁰ colony forming units (CFU) per hectare, at about 1 × 10⁶ to about 1 × 10⁸ colony forming units (CFU) per hectare, at about 1 × 10⁸ to about 1 × 10¹⁴ colony forming units (CFU) per hectare, at about 1 × 10⁸ to about 1 × 10¹² colony forming units (CFU) per hectare, or at about 1 × 10⁸ to about 1 × 10¹⁰ colony forming units (CFU) per hectare.

In other aspects, the compositions of the present invention are applied at about 1 × 10⁶ to about 1 × 10¹⁴ colony forming units (CFU) per hectare, at about 1 × 10⁶ to about 1 × 10¹² colony forming units (CFU) per hectare, at about 1 × 10⁶ to about 1 × 10¹⁰ colony forming units (CFU) per hectare, at about 1 × 10⁶ to about 1 × 10⁸ colony forming units (CFU) per hectare. In yet other aspects, the compositions of the present invention are applied at about 1 × 10⁹ to about 1 × 10¹³ colony forming units (CFU) per hectare. In one aspect, the compositions of the present invention are applied at about 1 × 10¹⁰ to about 1 × 10¹² colony forming units (CFU) per hectare.

In certain embodiments, the compositions of the present invention are applied at about 0.1 kg to about 20 kg fermentation solids per hectare. In some embodiments, the compositions of the present invention are applied at about 0.1 kg to about 10 kg fermentation solids per hectare. In other embodiments, the compositions of the present invention are applied at about 0.25 kg to about 7.5 kg fermentation solids per hectare. In yet other embodiments, the compositions of the present invention are applied at about 0.5 kg to about 5 kg fermentation solids per hectare. The compositions of the present invention may also be applied at about 1 kg or about 2 kg fermentation solids per hectare.

### DEPOSIT INFORMATION

Samples of the *Paenibacillus* sp. strains of the invention have been deposited with the Agricultural Research Service Culture Collection located at the National Center for Agricultural Utilization Research, Agricultural Research Service, U.S. Department of Agriculture (NRRL), 1815 North University Street, Peoria, IL 61604, U.S.A., under the Budapest Treaty. *Paenibacillus* sp. NRRL B-50972 was deposited on August 28, 2014. *Paenibacillus* sp. NRRL B-67129 was deposited on September 1, 2015. *Paenibacillus* sp. NRRL B-67304 and *Paenibacillus* sp. NRRL B-67306 were both deposited on July 22, 2016. *Paenibacillus* sp. NRRL B-67615 was deposited on May 3, 2018.

The *Paenibacillus* sp. strains have been deposited under conditions that assure that access to the culture will be available during the pendency of this patent application to one determined by the Commissioner of Patents and Trademarks to be entitled thereto under 37 C.F.R. § 1.14 and 35 U.S.C. §122. However, it should be understood that the availability of a deposit does not constitute a license to practice the subject invention in derogation of patent rights granted by governmental action.

The following examples are given for purely illustrative and non-limiting purposes of the present invention.

### EXAMPLES

### Example 1. Activity of Paenibacillus Strains against Plutella xylostella and Trichoplusia ni

The insecticidal activity of several different species of *Paenibacillus* was evaluated against *Plutella xylostella* (diamondback moth) and *Trichoplusia ni* (cabbage looper). Strains from each of the following *Paenibacillus* species were evaluated: *P. alvei, P. amylolyticus, P. catalpae, P. lautus, P. phyllosphaerae,* and *P. terrae.* Two different strains of *P. catalpae* designated as *"P. catalpae* (1)" and *"P. catalpae* (2)" were evaluated. *P. terrae* strain NRRL B-50972 was the *P. terrae* strain selected for this initial analysis.

A 96-well plate assay was performed to test the insecticidal activity of each *Paenibacillus* strain. Whole broth cultures ("WB") of the strains were produced by growing the strains in a soy-based medium. These WB samples from the strains were then applied to 96-well microplates containing an agar substrate similar to that described in Marrone et al. (1985), "Improvements in Laboratory Rearing of the Southern Corn Rootworm, Diabrotica undecimpuncta howardi Barber (Coleoptera: Chrysomelidae), on an Artificial Diet and Corn," J. Econ. Entomol., 78: 290-293. The WB samples were applied at concentrations of 12.5%, 25%, 50%, and 100% to the plates.

After the treatments had been allowed to dry, about 20 eggs from *Plutella xylostella* (diamondback moth) or *Trichoplusia ni* (cabbage looper) were added to each well. Several days later, the insecticidal activity was determined by calculating the percent whole broth of each *Paenibacillus* strain that was required to kill 50 percent of the insect population (i.e., the LD₅₀). An LD₅₀ of 100% indicates that the LD₅₀ of the *Paenibacillus* strain was greater than or equal to 100% whole broth.

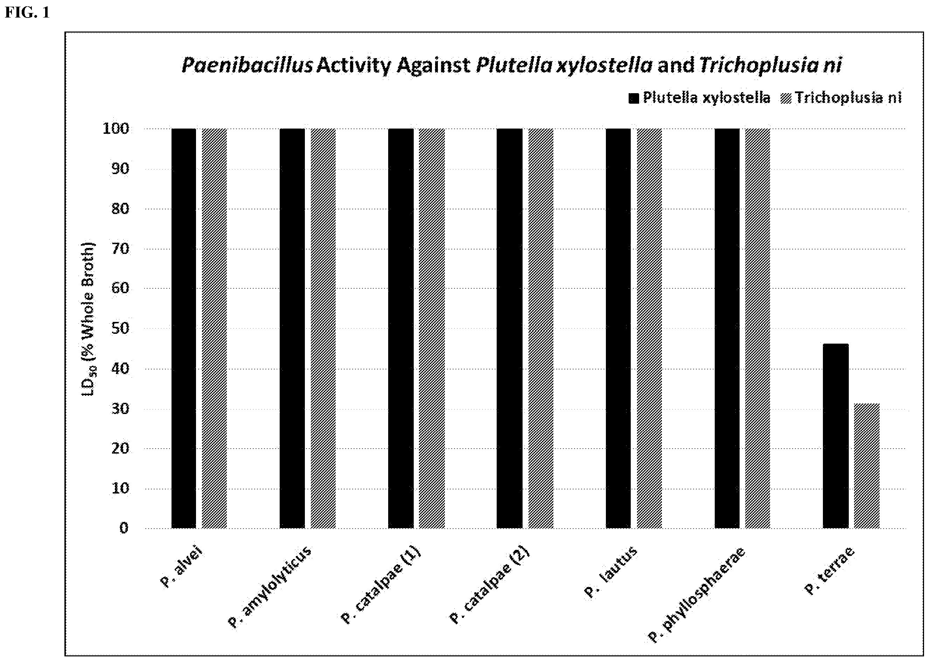

Only the *Paenibacillus terrae* strain NRRL B-50972 demonstrated significant insecticidal activity with an LD₅₀ of 46% whole broth for *Plutella xylostella* and an LD₅₀ of 31% whole broth for *Trichoplusia ni* (see **FIG. 1****).**

### Example 2. Activity of Paenibacillus terrae Strain NRRL B-50972 against Caenorhabditis elegans and Meloidogyne incognita

WB samples of *Paenibacillus terrae* strain NRRL B-50972 were produced by growing the strain in a soy-based medium. The WB samples were then applied to plates containing *Caenorhabditis elegans* at WB concentrations of 1.56%, 6.25%, 25%, and 100%, and the resulting nematode mortality was determined. The soy-based medium was also applied to the *Caenorhabditis elegans* at the same concentrations as negative controls showing the effect of the growth medium without *Paenibacillus terrae* strain NRRL B-50972. An increase in nematode mortality was reported as a positive percentage with 100% corresponding with no surviving nematodes. Treatments that increased nematode populations rather than causing mortality were reported as a negative percentage.

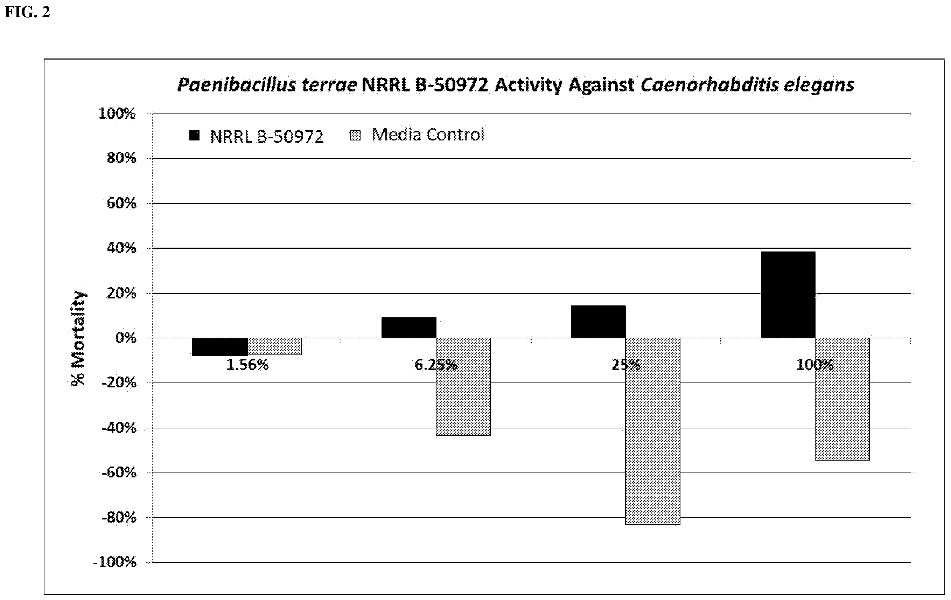

Treatment of *Caenorhabditis elegans* with *Paenibacillus terrae* strain NRRL B-50972 resulted in a dose-dependent increase in nematode mortality with the 100% WB sample causing about 40% mortality (see the black bars in **FIG. 2**). The negative controls showed the opposite effect (see the gray bars in **FIG. 2**).

In a separate set of experiments, WB samples of *Paenibacillus terrae* strain NRRL B-50972 were evaluated for nematicidal activity against *Meloidogyne incognita* (root knot nematode). At a concentration of 15 ppm, treatment of the nematodes with the WB samples of *Paenibacillus terrae* strain NRRL B-50972 resulted in 100% mortality.

### Example 3. Activity of Paenibacillus terrae Strain NRRL B-50972 against Nezara viridula (Southern Green Stink Bug)

WB samples of *Paenibacillus terrae* strain NRRL B-50972 were produced by growing the strain in a soy-based medium. The WB samples were then applied to plates containing *Nezara viridula* (southern green stink bug) at WB concentrations of 1.56%, 6.25%, 25%, and 100%, and the resulting stunting of insect growth was determined. The soy-based medium was also applied to the *Nezara viridula* at the same concentrations as negative controls showing the effect of the growth medium without *Paenibacillus terrae* strain NRRL B-50972. The stunting score was calculated as: total insect death - total insect molt / total insects assayed. A stunting score closer to +1 indicates that a greater number of insects died while a stunting score closer to -1 indicates that a greater number of insects molted and developed normally.

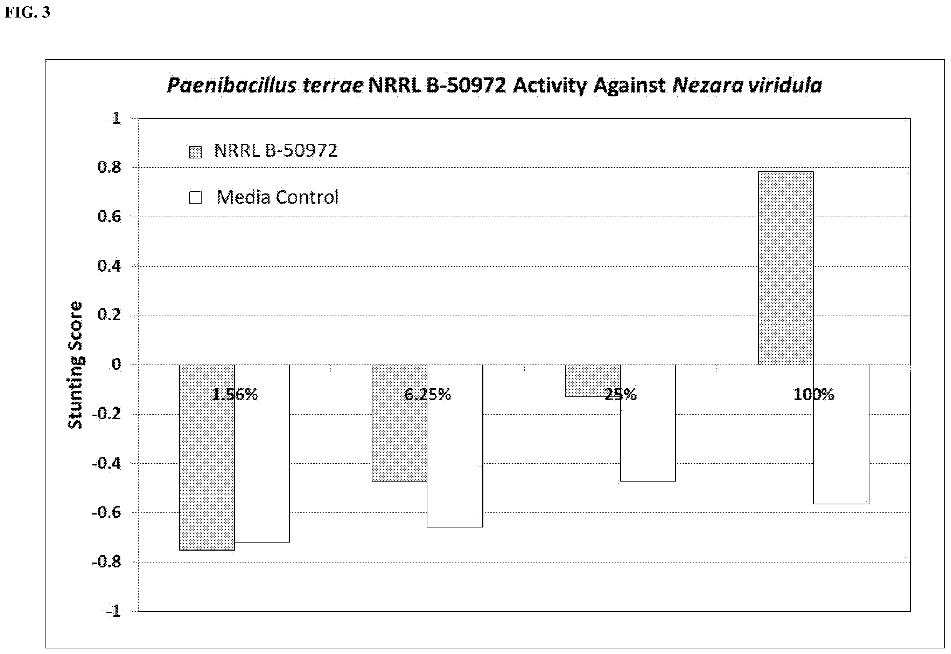

Treatment of *Nezara viridula* with *Paenibacillus terrae* strain NRRL B-50972 resulted in a dose-dependent increase in insect stunting with the 100% WB sample producing a stunting score of about 0.8 (see the black bars in **FIG. 3**). The negative controls showed the opposite effect (see the gray bars in **FIG. 3****).**

### Example 4. Activity of Paenibacillus terrae Strain NRRL B-50972 against Anticarsia gemmatalis (Velvetbean Caterpillar)

WB samples of *Paenibacillus terrae* strain NRRL B-50972 were produced by growing the strain in a soy-based medium. The WB samples were then applied to plates containing *Anticarsia gemmatalis* (velvet bean caterpillar) at WB concentrations of 1.56%, 6.25%, 25%, and 100%, and the resulting stunting of insect growth was determined. A stunting score closer to 4 indicates that a greater number of insects failed to molt and develop while a stunting score closer to 0 indicates that a greater number of insects developed normally.

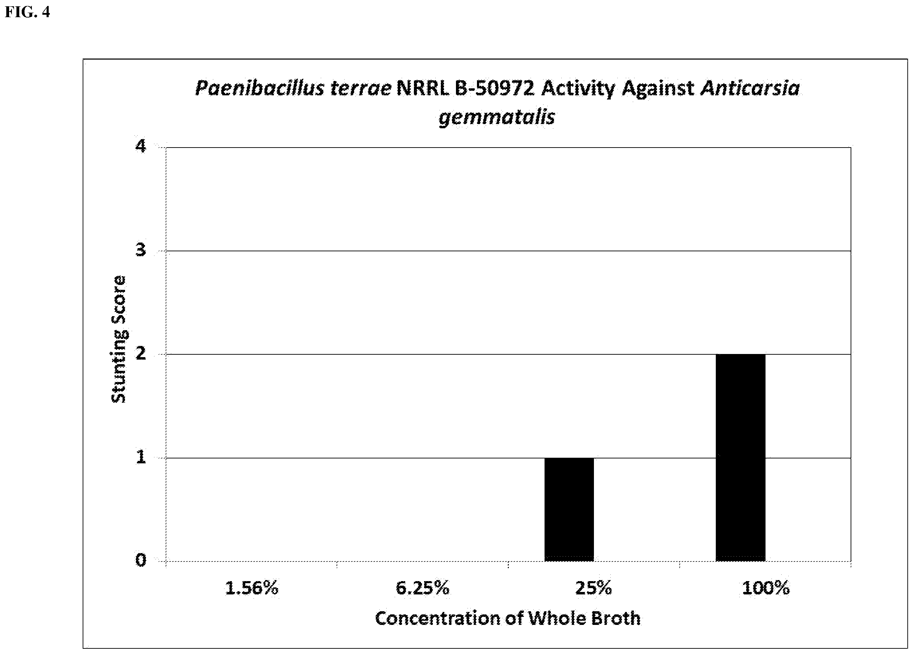

Treatment of *Anticarsia gemmatalis* with *Paenibacillus terrae* strain NRRL B-50972 resulted in a dose-dependent increase in stunting with the 100% WB sample producing a stunting score of 2 (see **FIG. 4**).

### Example 5. Activity of Paenibacillus terrae Strain NRRL B-50972 against Spodoptera eridania (Southern Armyworm)

WB samples of *Paenibacillus terrae* strain NRRL B-50972 were produced by growing the strain in a soy-based medium. The WB samples were then applied to plates containing *Spodoptera eridania* (southern armyworm) at WB concentrations of 1.56%, 6.25%, 25%, and 100%, and the resulting stunting of insect growth was determined. A stunting score closer to 4 indicates that a greater number of insects failed to molt and develop while a stunting score closer to 0 indicates that a greater number of insects developed normally.

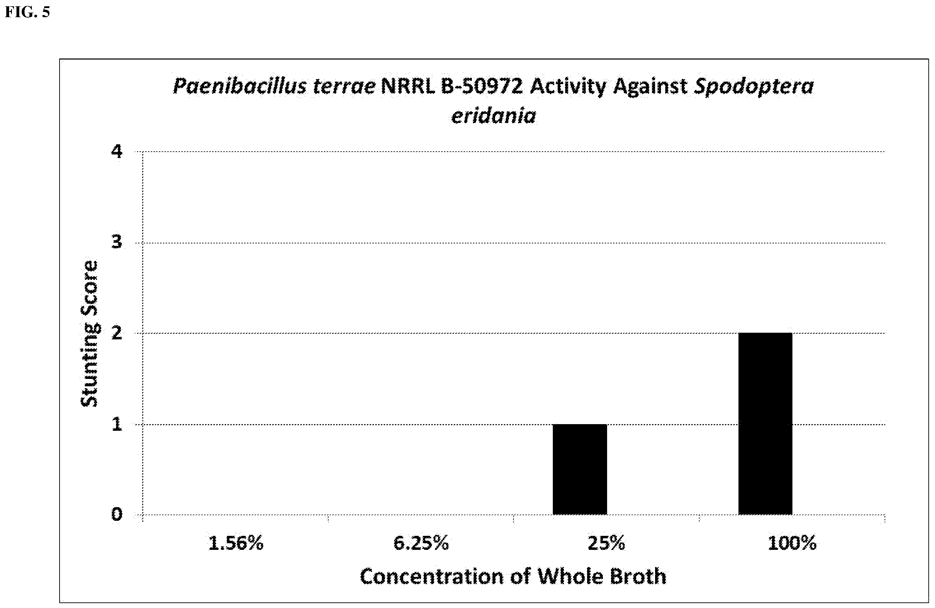

Treatment of *Spodoptera eridania* with *Paenibacillus terrae* strain NRRL B-50972 resulted in a dose-dependent increase in stunting with the 100% WB sample producing a stunting score of 2 (see **FIG. 5**)**.**

### Example 6. Activity of Paenibacillus terrae Strain NRRL B-50972 against Diabrotica undecimpunctata undecimpunctata (Western Spotted Cucumber Beetle)

WB samples of *Paenibacillus terrae* strain NRRL B-50972 were produced by growing the strain in a soy-based medium. The WB samples were then applied to plates containing *Diabrotica undecimpunctata undecimpunctata* (western spotted cucumber beetle) at WB concentrations of 12%, 25%, 50%, and 100%, and the resulting insect growth and survival was determined. An insect growth and survival score closer to 4 indicates that a greater number of insects survived and developed normally while a score closer to 1 indicates that a greater number of insects were killed. Positive controls included a chemical standard ("Chemical Std") and a microbial standard ("Microbial Std") with known activity against *Diabrotica undecimpunctata undecimpunctata.* Negative controls included untreated insects ("Untreated") and insects subjected to the soy-based medium without *Paenibacillus terrae* strain NRRL B-50972 ("Media Control").

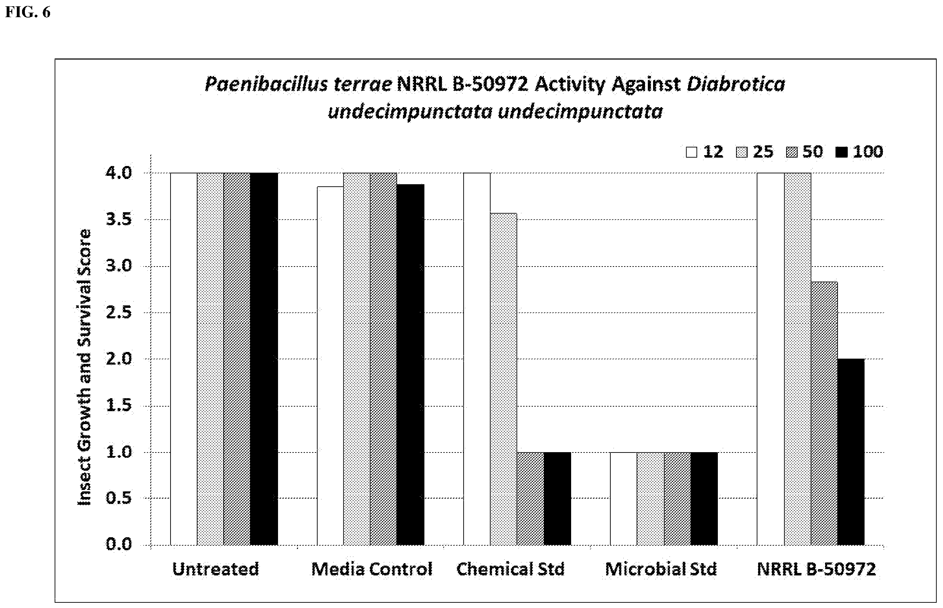

Treatment of *Diabrotica undecimpunctata undecimpunctata* with *Paenibacillus terrae* strain NRRL B-50972 resulted in a dose-dependent decrease in insect growth and survival with the 100% WB sample producing a score of 2 (see **FIG. 6**).

### Example 7. Activity of Paenibacillus terrae Strains Against Plutella xylostella (Diamondback Moth)

Insecticidal activity against *Plutella xylostella* (diamondback moth) was evaluated as described in Example 1. WB samples of the *Paenibacillus terrae* strains were produced by growing the strains in soy-based media. The WB samples were then applied to plates containing *Plutella xylostella* at WB concentrations of 0.78%, 1.56%, 6.25%, 12.5%, 25%, 50%, and 100%, and the resulting insect survival was determined. An insect survival score closer to 4 indicates that a greater number of insects survived while a score closer to 1 indicates that fewer insects survived. For each *Paenibacillus terrae* strain evaluated the corresponding soy-based medium was tested as a negative control.

Treatment of *Plutella xylostella* with *Paenibacillus terrae* strains NRRL B-50972, NRRL B-67129, NRRL B-67306, NRRL B-67304, or NRRL B-67615 resulted in a dose-dependent decrease in insect survival (see **FIGs. 7A-7E****).**

### Example 8. Activity of Paenibacillus terrae Strains Against Trichoplusia ni (Cabbage Looper)

Insecticidal activity against *Trichoplusia ni* (cabbage looper) was evaluated as described in Example 1. WB samples of the *Paenibacillus terrae* strains were produced by growing the strains in soy-based media. The WB samples were then applied to plates containing *Trichoplusia ni* at WB concentrations of 0.78%, 1.56%, 3.13%, 6.25%, 12.5%, 25%, 50%, and 100%, and the resulting insect survival was determined. An insect survival score closer to 4 indicates that a greater number of insects survived while a score closer to 1 indicates that fewer insects survived. For each *Paenibacillus terrae* strain evaluated the corresponding soy-based medium was tested as a negative control.

Treatment of *Trichoplusia ni* with *Paenibacillus terrae* strains NRRL B-50972, NRRL B-67129, NRRL B-67306, NRRL B-67304, or NRRL B-67615 resulted in a dose-dependent decrease in insect survival (see **FIGs. 8A-8E****).**

Unless defined otherwise, all technical and scientific terms herein have the same meaning as commonly understood by one of ordinary skill in the art to which this invention belongs.

## Claims

1. A non-therapeutic method of controlling animal pests comprising applying to an animal pest that is an insect an effective amount of a composition comprising a biologically pure culture of a *Paenibacillus terrae* strain or a cell-free preparation thereof, wherein the *Paenibacillus terrae* strain is selected from the group consisting of *Paenibacillus terrae* strain NRRL B-50972, *Paenibacillus terrae* strain NRRL B-67129, *Paenibacillus terrae* strain NRRL B-67306, *Paenibacillus terrae* strain NRRL B-67304, *Paenibacillus terrae* strain NRRL B-67615.

2. A method of protecting a useful plant or a part of a useful plant in need of protection from insect pest damage, the method comprising contacting an animal pest that is an insect, a plant, a plant propagule, a seed of a plant, and/or a locus where a plant is growing or is intended to grow with an effective amount of a composition comprising a biologically pure culture of a *Paenibacillus terrae* strain or a cell-free preparation thereof, wherein the *Paenibacillus terrae* strain is selected from the group consisting of *Paenibacillus terrae* strain NRRL B-50972, *Paenibacillus terrae* strain NRRL B-67129, *Paenibacillus terrae* strain NRRL B-67306, *Paenibacillus terrae* strain NRRL B-67304, *Paenibacillus terrae* strain NRRL B-67615.

3. A method of protecting a seed or a plant from which the seed grows from damage by insect pests comprising treating an animal pest that is an insect, a seed, and/or a locus where a seed is growing or is intended to grow with an effective amount of a composition comprising a biologically pure culture of a *Paenibacillus terrae* strain or a cell-free preparation thereof, wherein the *Paenibacillus terrae* strain is selected from the group consisting of *Paenibacillus terrae* strain NRRL B-50972, *Paenibacillus terrae* strain NRRL B-67129, *Paenibacillus terrae* strain NRRL B-67306, *Paenibacillus terrae* strain NRRL B-*67304, Paenibacillus terrae* strain NRRL B-67615.

4. The method according to Claim 2 or 3, wherein the seed is transgenic seed.

5. The method according to any one of the preceding claims, wherein the *Paenibacillus terrae* strain is *Paenibacillus terrae* strain NRRL B-67615.

6. The method according to any one of the preceding claims, wherein the animal pest is from the order of Coleoptera, Lepidoptera, or Hemiptera.

7. The method according to Claim 6, wherein the animal pest is (a) from the order of Coleoptera and is *Acanthoscelides obtectus, Adoretus* spp., *Agelastica alni, Agriotes* spp., *Amphimallon solstitialis, Anobium punctatum, Anoplophora* spp., *Anthonomus* spp., *Anthrenus* spp., *Apogonia* spp., *Atomaria* spp., *Attagenus* spp., *Bruchidius obtectus, Bruchus* spp., *Ceuthorhynchus* spp., *Cleonus mendicus, Conoderus* spp., *Cosmopolites* spp., *Costelytra zealandica, Curculio* spp., *Cryptorhynchus lapathi, Dermestes* spp., *Diabrotica* spp., *Epilachna* spp., *Faustinus cubae, Gibbium psylloides, Heteronychus arator, Hylamorpha elegans, Hylotrupes bajulus, Hypera postica, Hypothenemus* spp., *Lachnosterna consanguinea, Leptinotarsa decemlineata, Lissorhoptrus oryzophilus, Lixus* spp., *Lyctus* spp., *Meligethes aeneus, Melolontha melolontha, Migdolus* spp., *Monochamus* spp., *Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga* spp., *Popillia japonica, Premnotrypes* spp., *Psylliodes chrysocephala, Ptinus* spp., *Rhizobius ventralis, Rhizopertha dominica, Sitophilus* spp., *Sphenophorus* spp., *Sternechus* spp., *Symphyletes* spp., *Tenebrio molitor, Tribolium* spp., *Trogoderma* spp., *Tychius* spp., *Xylotrechus* spp., or *Zabrus* spp.; (b) from the order of Lepidoptera and is *Acronicta major, Aedia leucomelas, Agrotis* spp., *Alabama argillacea, Anticarsia* spp., *Barathra brassicae, Bucculatrix thurberiella, Bupalus piniarius, Cacoecia podana, Capua reticulana, Carpocapsa pomonella, Cheimatobia brumata, Chilo* spp., *Choristoneura fumiferana, Clysia ambiguella, Cnaphalocerus* spp., *Earias insulana, Ephestia kuehniella, Euproctis chrysorrhoea, Euxoa* spp., *Feltia* spp., *Galleria mellonella, Helicoverpa* spp., *Heliothis* spp., *Hofmannophila pseudospretella, Homona magnanima, Hyponomeuta padella, Laphygma* spp., *Lithocolletis blancardella, Lithophane antennata, Loxagrotis albicosta, Lymantria* spp., *Malacosoma neustria, Mamestra brassicae, Mocis repanda, Mythimna separata, Oria* spp., *Oulema oryzae, Panolis flammea, Pectinophora gossypiella, Phyllocnistis citrella, Pieris* spp., *Plutella xylostella, Prodenia* spp., *Pseudaletia* spp., *Pseudoplusia includens, Pyrausta nubilalis, Spodoptera* spp., *Thermesia gemmatalis, Tinea pellionella, Tineola bisselliella, Tortrix viridana,* or *Trichoplusia* spp.; or (c) from the order of Hemiptera and the suborder Heteroptera and is *Aelia* spp., *Anasa tristis, Antestiopsis* spp., *Boisea* spp., *Blissus* spp., *Calocoris* spp., *Campylomma livida, Cavelerius* spp., *Cimex* spp., *Collaria* spp., *Creontiades dilutus, Dasynus piperis, Dichelops furcatus, Diconocoris hewetti, Dysdercus* spp., *Euschistus* spp., *Eurydema* spp., *Eurygaster* spp., *Halyomorpha halys, Heliopeltis* spp., *Horcias nobilellus, Leptocorisa* spp., *Leptocorisa varicornis, Leptoglossus occidentalis, Leptoglossus phyllopus, Lygocoris* spp., *Lygus* spp., *Macropes excavatus, Megacopta cribraria, Miridae, Monalonion atratum, Nezara* spp., *Nysius* spp., *Oebalus* spp., *Pentomidae, Piesma quadrata, Piezodorus* spp., *Psallus* spp., *Pseudacysta persea, Rhodnius* spp., *Sahlbergella singularis, Scaptocoris castanea, Scotinophora* spp., *Stephanitis nashi, Tibraca* spp., or *Triatoma* spp.

8. The non-therapeutic use of a composition comprising a biologically pure culture of a *Paenibacillus terrae* strain, wherein the *Paenibacillus terrae* strain is selected from the group consisting of *Paenibacillus terrae* strain NRRL B-50972, *Paenibacillus terrae* strain NRRL B-67129, *Paenibacillus terrae* strain NRRL B-67306, *Paenibacillus terrae* strain NRRL B-67304, *Paenibacillus terrae* strain NRRL B-67615, or a cell-free preparation thereof for controlling animal pests that are insects, for protecting a useful plant or a part of a useful plant in need of protection from said animal pest damage, or for protecting a seed or a plant from which the seed grows from damage by said animal pest.

9. The use according to Claim 13, wherein the animal pest is from the order of Coleoptera, Lepidoptera, or Hemiptera.

10. A non-therapeutic method of controlling animal pests comprising applying to an animal pest that is a nematode an effective amount of a composition comprising a biologically pure culture of *Paenibacillus terrae* strain NRRL B-50972 or NRRL B-67129 or a cell-free preparation thereof.

11. A method of protecting a useful plant or a part of a useful plant in need of protection from nematode pest damage, the method comprising contacting an animal pest that is a nematode, a plant, a plant propagule, a seed of a plant, and/or a locus where a plant is growing or is intended to grow with an effective amount of a composition comprising a biologically pure culture of *Paenibacillus terrae* strain NRRL B-50972 or NRRL B-67129 or a cell-free preparation thereof.

12. A method of protecting a seed or a plant from which the seed grows from damage by nematode pests comprising treating an animal pest that is a nematode, a seed, and/or a locus where a seed is growing or is intended to grow with an effective amount of a composition comprising a biologically pure culture of *Paenibacillus terrae* strain NRRL B-50972 or NRRL B-67129 or a cell-free preparation thereof.

13. The method according to any one of Claims 10 to 12, wherein the animal pest is *Aglenchus* spp., *Anguina* spp., *Aphelenchoides* spp., *Belonolaimus* spp., *Bursaphelenchus* spp., *Cacopaurus* spp., *Criconemella* spp., *Criconemoides* spp., *Ditylenchus* spp., *Dolichodorus* spp., *Globodera* spp., *Helicotylenchus* spp., *Hemicriconemoides* spp., *Hemicycliophora* spp., *Heterodera* spp., *Hoplolaimus* spp., *Longidorus* spp., *Meloidogyne* spp., *Meloinema* spp., *Nacobbus* spp., *Neotylenchus* spp., *Paralongidorus* spp., *Paraphelenchus* spp., *Paratrichodorus* spp., *Pratylenchus* spp., *Pseudohalenchus* spp., *Psilenchus* spp., *Punctodera* spp., *Quinisulcius* spp., *Radopholus* spp., *Rotylenchulus* spp., *Rotylenchus* spp., *Scutellonema* spp., *Subanguina* spp., *Trichodorus* spp., *Tylenchulus* spp., *Tylenchorhynchus* spp., or *Xiphinema* spp.

14. The method according to any one of Claims 10 to 13, wherein the composition comprises a fermentation product of the *Paenibacillus terrae* strain.

15. The method according to Claim 14, wherein the composition is a liquid formulation.

16. The method according to Claim 14 or Claim 15, wherein the composition comprises at least about 1 × 10⁴ CFU of the *Paenibacillus terrae* strain/mL of the liquid formulation.

17. The method according to any one of Claims 14 to 16, wherein the composition further comprises an agriculturally acceptable carrier, inert, stabilization agent, preservative, nutrient, and/or physical property modifying agent.

18. The method according to any one of Claims 14 to 17, wherein the composition is applied at about 1 × 10⁴ to about 1 × 10¹⁴ colony forming units (CFU) per hectare or at about 0.1 kg to about 20 kg fermentation solids per hectare.

19. The non-therapeutic use of a composition comprising a biologically pure culture of *Paenibacillus terrae* strain NRRL B-50972 or NRRL B-67129, or a cell-free preparation thereof for controlling animal pests that are nematodes, for protecting a useful plant or a part of a useful plant in need of protection from said animal pest damage, or for protecting a seed or a plant from which the seed grows from damage by said animal pest.

## Patentansprüche

1. Ein nicht-therapeutisches Verfahren zur Bekämpfung tierischer Schädlinge, umfassend das Aufbringen einer wirksamen Menge einer Zusammensetzung auf einen tierischen Schädling, der ein Insekt ist, wobei die Zusammensetzung eine biologisch reine Kultur eines *Paenibacillus terrae*-Stamms oder eine zellfreie Zubereitung davon umfasst, wobei der *Paenibacillus terrae-*Stamm aus der Gruppe bestehend aus *Paenibacillus terrae*-Stamm NRRL B-50972, *Paenibacillus terrae*-Stamm NRRL B-67129, *Paenibacillus terrae*-Stamm NRRL B-67306, *Paenibacillus terrae-*Stamm NRRL B-67304, *Paenibacillus terrae*-Stamm NRRL B-67615 ausgewählt ist.

2. Ein Verfahren zum Schützen einer Nutzpflanze oder eines Teils einer schutzbedürftigen Nutzpflanze vor Schäden durch Insektenschädlinge, wobei das Verfahren das Inkontaktbringen eines tierischen Schädlings, der ein Insekt ist, einer Pflanze, eines Pflanzenvermehrungsmaterials, eines Samens einer Pflanze und/oder eines Ortes, an dem eine Pflanze wächst oder wachsen soll, mit einer wirksamen Menge einer Zusammensetzung umfasst, die eine biologisch reine Kultur eines *Paenibacillus terrae*-Stamms oder eine zellfreie Zubereitung davon umfasst, wobei der *Paenibacillus terrae*-Stamm aus der Gruppe bestehend aus *Paenibacillus terrae*-Stamm NRRL B-50972, *Paenibacillus terrae*-Stamm NRRL B-67129, *Paenibacillus terrae*-Stamm NRRL B-67306, *Paenibacillus terrae*-Stamm NRRL B-67304, *Paenibacillus terrae*-Stamm NRRL B-67615 ausgewählt ist.

3. Ein Verfahren zum Schützen eines Samens oder einer Pflanze, aus der der Samen wächst, vor Schäden durch Insektenschädlinge, umfassend das Behandeln eines tierischen Schädlings, der ein Insekt ist, eines Samens und/oder eines Ortes, an dem ein Samen wächst oder wachsen soll, mit einer wirksamen Menge einer Zusammensetzung, die eine biologisch reine Kultur eines *Paenibacillus terrae*-Stamms oder eine zellfreie Zubereitung davon umfasst, wobei der *Paenibacillus terrae*-Stamm aus der Gruppe ausgewählt ist, bestehend aus *Paenibacillus terrae-*Stamm NRRL B-50972, *Paenibacillus terrae*-Stamm NRRL B-67129, *Paenibacillus terrae*-Stamm NRRL B-67306, *Paenibacillus terrae*-Stamm NRRL B-67304, *Paenibacillus terrae*-Stamm NRRL B-67615.

4. Das Verfahren nach Anspruch 2 oder 3, wobei der Samen ein transgener Samen ist.

5. Das Verfahren nach einem der vorhergehenden Ansprüche, wobei der *Paenibacillus terrae-*Stamm der *Paenibacillus terrae*-Stamm NRRL B-67615 ist.

6. Das Verfahren nach einem der vorhergehenden Ansprüche, wobei der tierische Schädling aus der Ordnung Coleoptera, Lepidoptera oder Hemiptera ist.

7. Das Verfahren nach Anspruch 6, wobei der tierische Schädling
(a) aus der Ordnung Coleoptera ist und *Acanthoscelides obtectus*, *Adoretus* spp., *Agelastica alni*, *Agriotes* spp., *Amphimallon solstitialis*, *Anobium punctatum*, *Anoplophora* spp., *Anthonomus* spp., *Anthrenus* spp., *Apogonia* spp., *Atomaria* spp., *Attagenus* spp., *Bruchidius obtectus*, *Bruchus* spp., *Ceuthorhynchus* spp., *Cleonus mendicus*, *Conoderus* spp., *Cosmopolites* spp., *Costelytra zealandica*, *Curculio* spp., *Cryptorhynchus lapathi*, *Dermestes* spp., *Diabrotica* spp., *Epilachna* spp., *Faustinus cubae*, *Gibbium psylloides*, *Heteronychus arator*, *Hylamorpha elegans*, *Hylotrupes bajulus*, *Hypera postica*, *Hypothenemus* spp., *Lachnosterna consanguinea*, *Leptinotarsa decemlineata*, *Lissorhoptrus oryzophilus*, *Lixus* spp., *Lyctus* spp., *Meligethes aeneus*, *Melolontha melolontha*, *Migdolus* spp., *Monochamus* spp., *Naupactus xanthographus*, *Niptus hololeucus*, *Oryctes rhinoceros*, *Oryzaephilus surinamensis*, *Otiorrhynchus sulcatus*, *Oxycetonia jucunda*, *Phaedon cochleariae*, *Phyllophaga* spp., *Popillia japonica*, *Premnotrypes* spp., *Psylliodes chrysocephala*, *Ptinus* spp., *Rhizobius ventralis*, *Rhizopertha dominica*, *Sitophilus* spp., *Sphenophorus* spp., *Sternechus* spp., *Symphyletes* spp., *Tenebrio molitor*, *Tribolium* spp., *Trogoderma* spp., *Tychius* spp., *Xylotrechus* spp. oder *Zabrus* spp. ist;
(b) aus der Ordnung Lepidoptera ist und *Acronicta major*, *Aedia leucomelas*, *Agrotis* spp., *Alabama argillacea*, *Anticarsia* spp., *Barathra brassicae*, *Bucculatrix thurberiella*, *Bupalus piniarius*, *Cacoecia podana*, *Capua reticulana*, *Carpocapsa pomonella*, *Cheimatobia brumata*, *Chilo* spp., *Choristoneura fumiferana*, *Clysia ambiguella*, *Cnaphalocerus* spp., *Earias insulana*, *Ephestia kuehniella*, *Euproctis chrysorrhoea*, *Euxoa* spp., *Feltia* spp., *Galleria mellonella*, *Helicoverpa* spp., *Heliothis* spp., *Hofmannophila pseudospretella*, *Homona magnanima*, *Hyponomeuta padella*, *Laphygma* spp., *Lithocolletis blancardella*, *Lithophane antennata*, *Loxagrotis albicosta*, *Lymantria* spp., *Malacosoma neustria*, *Mamestra brassicae*, *Mocis repanda*, *Mythimna separata*, *Oria* spp., *Oulema oryzae*, *Panolis flammea*, *Pectinophora gossypiella*, *Phyllocnistis citrella*, *Pieris* spp., *Plutella xylostella*, *Prodenia* spp., *Pseudaletia* spp., *Pseudoplusia includens*, *Pyrausta nubilalis*, *Spodoptera* spp., *Thermesia gemmatalis*, *Tinea pellionella*, *Tineola bisselliella*, *Tortrix viridana* oder *Trichoplusia* spp. ist; oder
(c) aus der Ordnung Hemiptera und der Unterordnung Heteroptera ist und *Aelia* spp., *Anasa tristis*, *Antestiopsis* spp., *Boisea* spp., *Blissus* spp., *Calocoris* spp., *Campylomma livida*, *Cavelerius* spp., *Cimex* spp., *Collaria* spp., *Creontiades dilutus*, *Dasynus piperis*, *Dichelops furcatus*, *Diconocoris hewetti*, *Dysdercus* spp., *Euschistus* spp., *Eurydema* spp., *Eurygaster* spp., *Halyomorpha halys*, *Heliopeltis* spp., *Horcias nobilellus*, *Leptocorisa* spp., *Leptocorisa varicornis*, *Leptoglossus occidentalis*, *Leptoglossus phyllopus*, *Lygocoris* spp., *Lygus* spp., *Macropes excavatus*, *Megacopta cribraria*, *Miridae*, *Monalonion atratum*, *Nezara* spp., *Nysius* spp., *Oebalus* spp., *Pentomidae*, *Piesma quadrata*, *Piezodorus* spp., *Psallus* spp., *Pseudacysta persea*, *Rhodnius* spp., *Sahlbergella singularis*, *Scaptocoris castanea*, *Scotinophora* spp., *Stephanitis nashi*, *Tibraca* spp. oder *Triatoma* spp. ist.

8. Die nicht-therapeutische Verwendung einer Zusammensetzung, die eine biologisch reine Kultur eines *Paenibacillus terrae*-Stamms umfasst, wobei der *Paenibacillus terrae*-Stamm aus der Gruppe bestehend aus *Paenibacillus terrae*-Stamm NRRL B-50972, *Paenibacillus terrae*-Stamm NRRL B-67129, *Paenibacillus terrae*-Stamm NRRL B-67306, *Paenibacillus terrae*-Stamm NRRL B-67304, *Paenibacillus terrae*-Stamm NRRL B-67615, oder einer zellfreien Zubereitung davon ausgewählt ist, zur Bekämpfung tierischer Schädlinge, die Insekten sind, zum Schützen einer Nutzpflanze oder eines Teils einer schutzbedürftigen Nutzpflanze vor Schäden durch den genannten tierischen Schädling oder zum Schützen eines Samens oder einer Pflanze, aus der der Samen wächst, vor Schäden durch den genannten tierischen Schädling.

9. Die Verwendung nach Anspruch 13, wobei der tierische Schädling aus der Ordnung Coleoptera, Lepidoptera oder Hemiptera ist.

10. Ein nicht-therapeutisches Verfahren zur Bekämpfung tierischer Schädlinge, umfassend das Aufbringen einer wirksamen Menge einer Zusammensetzung auf einen tierischen Schädling, der ein Nematode ist, wobei die Zusammensetzung eine biologisch reine Kultur von *Paenibacillus terrae*-Stamm NRRL B-50972 oder NRRL B-67129 oder eine zellfreie Zubereitung davon umfasst.

11. Ein Verfahren zum Schützen einer Nutzpflanze oder eines Teils einer schutzbedürftigen Nutzpflanze vor Schäden durch Nematodenschädlinge, wobei das Verfahren das Inkontaktbringen eines tierischen Schädlings, der ein Nematode ist, einer Pflanze, eines Pflanzenvermehrungsmaterials, eines Samens einer Pflanze und/oder eines Ortes, an dem eine Pflanze wächst oder wachsen soll, mit einer wirksamen Menge einer Zusammensetzung umfasst, die eine biologisch reine Kultur von *Paenibacillus terrae*-Stamm NRRL B-50972 oder NRRL B-67129 oder eine zellfreie Zubereitung davon umfasst.

12. Ein Verfahren zum Schützen eines Samens oder einer Pflanze, aus der der Samen wächst, vor Schäden durch Nematodenschädlinge, umfassend das Behandeln eines tierischen Schädlings, der ein Nematode ist, eines Samens und/oder eines Ortes, an dem ein Samen wächst oder wachsen soll, mit einer wirksamen Menge einer Zusammensetzung, die eine biologisch reine Kultur von *Paenibacillus terrae*-Stamm NRRL B-50972 oder NRRL B-67129 oder eine zellfreie Zubereitung davon umfasst.

13. Das Verfahren nach einem der Ansprüche 10 bis 12, wobei der tierische Schädling *Aglenchus* spp., *Anguina* spp., *Aphelenchoides* spp., *Belonolaimus* spp., *Bursaphelenchus* spp., *Cacopaurus* spp., *Criconemella* spp., *Criconemoides* spp., *Ditylenchus* spp., *Dolichodorus* spp., *Globodera* spp., *Helicotylenchus* spp., *Hemicriconemoides* spp., *Hemicycliophora* spp., *Heterodera* spp., *Hoplolaimus* spp., *Longidorus* spp., *Meloidogyne* spp., *Meloinema* spp., *Nacobbus* spp., *Neotylenchus* spp., *Paralongidorus* spp., *Paraphelenchus* spp., *Paratrichodorus* spp., *Pratylenchus* spp., *Pseudohalenchus* spp., *Psilenchus* spp., *Punctodera* spp., *Quinisulcius* spp., *Radopholus* spp., *Rotylenchulus* spp., *Rotylenchus* spp., *Scutellonema* spp., *Subanguina* spp., *Trichodorus* spp., *Tylenchulus* spp., *Tylenchorhynchus* spp. oder *Xiphinema* spp. ist.

14. Das Verfahren nach einem der Ansprüche 10 bis 13, wobei die Zusammensetzung ein Fermentationsprodukt des *Paenibacillus terrae*-Stamms umfasst.

15. Das Verfahren nach Anspruch 14, wobei die Zusammensetzung eine flüssige Formulierung ist.

16. Das Verfahren nach Anspruch 14 oder Anspruch 15, wobei die Zusammensetzung mindestens etwa 1 × 10⁴ KBE des *Paenibacillus terrae*-Stamms/mL der flüssigen Formulierung umfasst.

17. Das Verfahren nach einem der Ansprüche 14 bis 16, wobei die Zusammensetzung ferner einen landwirtschaftlich akzeptablen Träger, ein Inertmittel, ein Stabilisierungsmittel, ein Konservierungsmittel, einen Nährstoff und/oder ein Mittel zur Modifizierung physikalischer Eigenschaften umfasst.

18. Das Verfahren nach einem der Ansprüche 14 bis 17, wobei die Zusammensetzung bei etwa 1 × 10⁴ bis etwa 1 × 10¹⁴ koloniebildenden Einheiten (KBE) pro Hektar oder bei etwa 0,1 kg bis etwa 20 kg Fermentationsfeststoffen pro Hektar angewendet wird.

19. Die nicht-therapeutische Verwendung einer Zusammensetzung, die eine biologisch reine Kultur von *Paenibacillus terrae*-Stamm NRRL B-50972 oder NRRL B-67129 oder eine zellfreie Zubereitung davon umfasst, zur Bekämpfung tierischer Schädlinge, die Nematoden sind, zum Schützen einer Nutzpflanze oder eines Teils einer schutzbedürftigen Nutzpflanze vor Schäden durch den genannten tierischen Schädling oder zum Schützen eines Samens oder einer Pflanze, aus der der Samen wächst, vor Schäden durch den genannten tierischen Schädling.

## Revendications

1. Un procédé non thérapeutique de lutte contre les ravageurs animaux comprenant l'application à un ravageur animal qui est un insecte d'une quantité efficace d'une composition comprenant une culture biologiquement pure d'une souche de *Paenibacillus terrae* ou une préparation acellulaire de celle-ci, dans laquelle la souche de *Paenibacillus terrae* est sélectionnée dans le groupe constitué de *Paenibacillus terrae* souche NRRL B-50972, *Paenibacillus terrae* souche NRRL B-67129, *Paenibacillus terrae* souche NRRL B-67306, *Paenibacillus terrae* souche NRRL B-67304, *Paenibacillus terrae* souche NRRL B-67615.

2. Un procédé de protection d'un végétal utile ou d'une partie d'un végétal utile nécessitant une protection contre les dommages causés par des insectes ravageurs, le procédé comprenant mettant en contact un ravageur animal qui est un insecte, un végétal, un propagule végétal, une semence d'un végétal et/ou un lieu où un végétal pousse ou est destiné à pousser avec une quantité efficace d'une composition comprenant une culture biologiquement pure d'une souche de *Paenibacillus terrae* ou une préparation acellulaire de celle-ci, dans laquelle la souche de *Paenibacillus terrae* est sélectionnée dans le groupe constitué de *Paenibacillus terrae* souche NRRL B-50972, *Paenibacillus terrae* souche NRRL B-67129, *Paenibacillus terrae* souche NRRL B-67306, *Paenibacillus terrae* souche NRRL B-67304, *Paenibacillus terrae* souche NRRL B-67615.

3. Un procédé de protection d'une semence ou d'un végétal issu de la semence contre les dommages causés par des insectes ravageurs comprenant traitant un ravageur animal qui est un insecte, une semence et/ou un lieu où une semence pousse ou est destinée à pousser avec une quantité efficace d'une composition comprenant une culture biologiquement pure d'une souche de *Paenibacillus terrae* ou une préparation acellulaire de celle-ci, dans laquelle la souche de *Paenibacillus terrae* est sélectionnée dans le groupe constitué de *Paenibacillus terrae* souche NRRL B-50972, *Paenibacillus terrae* souche NRRL B-67129, *Paenibacillus terrae* souche NRRL B-67306, *Paenibacillus terrae* souche NRRL B-67304, *Paenibacillus terrae* souche NRRL B-67615.

4. Le procédé selon la revendication 2 ou 3, dans lequel la semence est une semence transgénique.

5. Le procédé selon l'une quelconque des revendications précédentes, dans lequel la souche de *Paenibacillus terrae* est *Paenibacillus terrae* souche NRRL B-67615.

6. Le procédé selon l'une quelconque des revendications précédentes, dans lequel le ravageur animal appartient à l'ordre des Coleoptera, Lepidoptera ou Hemiptera.

7. Le procédé selon la revendication 6, dans lequel le ravageur animal est
(a) de l'ordre des Coleoptera et est *Acanthoscelides obtectus*, *Adoretus* spp., *Agelastica alni*, *Agriotes* spp., *Amphimallon solstitialis*, *Anobium punctatum*, *Anoplophora* spp., *Anthonomus* spp., *Anthrenus* spp., *Apogonia* spp., *Atomaria* spp., *Attagenus* spp., *Bruchidius obtectus*, *Bruchus* spp., *Ceuthorhynchus* spp., *Cleonus mendicus*, *Conoderus* spp., *Cosmopolites* spp., *Costelytra zealandica*, *Curculio* spp., *Cryptorhynchus lapathi*, *Dermestes* spp., *Diabrotica* spp., *Epilachna* spp., *Faustinus cubae*, *Gibbium psylloides*, *Heteronychus arator*, *Hylamorpha elegans*, *Hylotrupes bajulus*, *Hypera postica*, *Hypothenemus* spp., *Lachnosterna consanguinea*, *Leptinotarsa decemlineata*, *Lissorhoptrus oryzophilus*, *Lixus* spp., *Lyctus* spp., *Meligethes aeneus*, *Melolontha melolontha*, *Migdolus* spp., *Monochamus* spp., *Naupactus xanthographus*, *Niptus hololeucus*, *Oryctes rhinoceros*, *Oryzaephilus surinamensis*, *Otiorrhynchus sulcatus*, *Oxycetonia jucunda*, *Phaedon cochleariae*, *Phyllophaga* spp., *Popillia japonica*, *Premnotrypes* spp., *Psylliodes chrysocephala*, *Ptinus* spp., *Rhizobius ventralis*, *Rhizopertha dominica*, *Sitophilus* spp., *Sphenophorus* spp., *Sternechus* spp., *Symphyletes* spp., *Tenebrio molitor*, *Tribolium* spp., *Trogoderma* spp., *Tychius* spp., *Xylotrechus* spp., ou *Zabrus* spp*.* ;
(b) de l'ordre des Lepidoptera et est *Acronicta major*, *Aedia leucomelas*, *Agrotis* spp., *Alabama argillacea*, *Anticarsia* spp., *Barathra brassicae*, *Bucculatrix thurberiella*, *Bupalus piniarius*, *Cacoecia podana*, *Capua reticulana*, *Carpocapsa pomonella*, *Cheimatobia brumata*, *Chilo* spp., *Choristoneura fumiferana*, *Clysia ambiguella*, *Cnaphalocerus* spp., *Earias insulana*, *Ephestia kuehniella*, *Euproctis chrysorrhoea*, *Euxoa* spp., *Feltia* spp., *Galleria mellonella*, *Helicoverpa* spp., *Heliothis* spp., *Hofmannophila pseudospretella*, *Homona magnanima*, *Hyponomeuta padella*, *Laphygma* spp., *Lithocolletis blancardella*, *Lithophane antennata*, *Loxagrotis albicosta*, *Lymantria* spp., *Malacosoma neustria*, *Mamestra brassicae*, *Mocis repanda*, *Mythimna separata*, *Oria* spp., *Oulema oryzae*, *Panolis flammea*, *Pectinophora gossypiella*, *Phyllocnistis citrella*, *Pieris* spp., *Plutella xylostella*, *Prodenia* spp., *Pseudaletia* spp., *Pseudoplusia includens*, *Pyrausta nubilalis*, *Spodoptera* spp., *Thermesia gemmatalis*, *Tinea pellionella*, *Tineola bisselliella*, *Tortrix viridana*, ou *Trichoplusia* spp*.* ; ou
(c) de l'ordre des Hemiptera et du sous-ordre Heteroptera et est *Aelia* spp., *Anasa tristis*, *Antestiopsis* spp., *Boisea* spp., *Blissus* spp., *Calocoris* spp., *Campylomma livida*, *Cavelerius* spp., *Cimex* spp., *Collaria* spp., *Creontiades dilutus*, *Dasynus piperis*, *Dichelops furcatus*, *Diconocoris hewetti*, *Dysdercus* spp., *Euschistus* spp., *Eurydema* spp., *Eurygaster* spp., *Halyomorpha halys*, *Heliopeltis* spp., *Horcias nobilellus*, *Leptocorisa* spp., *Leptocorisa varicornis*, *Leptoglossus occidentalis*, *Leptoglossus phyllopus*, *Lygocoris* spp., *Lygus* spp., *Macropes excavatus*, *Megacopta cribraria*, *Miridae*, *Monalonion atratum*, *Nezara* spp., *Nysius* spp., *Oebalus* spp., *Pentomidae*, *Piesma quadrata*, *Piezodorus* spp., *Psallus* spp., *Pseudacysta persea*, *Rhodnius* spp., *Sahlbergella singularis*, *Scaptocoris castanea*, *Scotinophora* spp., *Stephanitis nashi*, *Tibraca* spp., ou *Triatoma* spp.

8. L'utilisation non thérapeutique d'une composition comprenant une culture biologiquement pure d'une souche de *Paenibacillus terrae* , dans laquelle la souche de *Paenibacillus terrae* est sélectionnée dans le groupe constitué de *Paenibacillus terrae* souche NRRL B-50972, *Paenibacillus terrae* souche NRRL B-67129, *Paenibacillus terrae* souche NRRL B-67306, *Paenibacillus terrae* souche NRRL B-67304, *Paenibacillus terrae* souche NRRL B-67615, ou une préparation acellulaire de celle-ci, pour lutter contre des ravageurs animaux qui sont des insectes, pour protéger un végétal utile ou une partie d'un végétal utile nécessitant une protection contre les dommages causés par ledit ravageur animal, ou pour protéger une semence ou un végétal issu de la semence contre les dommages causés par ledit ravageur animal.

9. L'utilisation selon la revendication 13, dans laquelle le ravageur animal appartient à l'ordre des Coleoptera, Lepidoptera ou Hemiptera.

10. Un procédé non thérapeutique de lutte contre les ravageurs animaux comprenant l'application à un ravageur animal qui est un nématode d'une quantité efficace d'une composition comprenant une culture biologiquement pure de *Paenibacillus terrae* souche NRRL B-50972 ou NRRL B-67129 ou une préparation acellulaire de celle-ci.

11. Un procédé de protection d'un végétal utile ou d'une partie d'un végétal utile nécessitant une protection contre les dommages causés par des nématodes ravageurs, le procédé comprenant mettant en contact un ravageur animal qui est un nématode, un végétal, un propagule végétal, une semence d'un végétal et/ou un lieu où un végétal pousse ou est destiné à pousser avec une quantité efficace d'une composition comprenant une culture biologiquement pure de *Paenibacillus terrae* souche NRRL B-50972 ou NRRL B-67129 ou une préparation acellulaire de celle-ci.

12. Un procédé de protection d'une semence ou d'un végétal issu de la semence contre les dommages causés par des ravageurs nématodes comprenant traitant un ravageur animal qui est un nématode, une semence et/ou un lieu où une semence pousse ou est destinée à pousser avec une quantité efficace d'une composition comprenant une culture biologiquement pure de *Paenibacillus terrae* souche NRRL B-50972 ou NRRL B-67129 ou une préparation acellulaire de celle-ci.

13. Le procédé selon l'une quelconque des revendications 10 à 12, dans lequel le ravageur animal est *Aglenchus* spp., *Anguina* spp., *Aphelenchoides* spp., *Belonolaimus* spp., *Bursaphelenchus* spp., *Cacopaurus* spp., *Criconemella* spp., *Criconemoides* spp., *Ditylenchus* spp., *Dolichodorus* spp., *Globodera* spp., *Helicotylenchus* spp., *Hemicriconemoides* spp., *Hemicycliophora* spp., *Heterodera* spp., *Hoplolaimus* spp., *Longidorus* spp., *Meloidogyne* spp., *Meloinema* spp., *Nacobbus* spp., *Neotylenchus* spp., *Paralongidorus* spp., *Paraphelenchus* spp., *Paratrichodorus* spp., *Pratylenchus* spp., *Pseudohalenchus* spp., *Psilenchus* spp., *Punctodera* spp., *Quinisulcius* spp., *Radopholus* spp., *Rotylenchulus* spp., *Rotylenchus* spp., *Scutellonema* spp., *Subanguina* spp., *Trichodorus* spp., *Tylenchulus* spp., *Tylenchorhynchus* spp., ou *Xiphinema* spp.

14. Le procédé selon l'une quelconque des revendications 10 à 13, dans lequel la composition comprend un produit de fermentation de la souche *Paenibacillus terrae* .

15. Le procédé selon la revendication 14, dans lequel la composition est une formulation liquide.

16. Le procédé selon la revendication 14 ou la revendication 15, dans lequel la composition comprend au moins environ 1 × 10⁴ UFC de la souche *Paenibacillus terrae*/mL de la formulation liquide.

17. Le procédé selon l'une quelconque des revendications 14 à 16, dans lequel la composition comprend en outre un support acceptable en agriculture, un agent inerte, un agent de stabilisation, un conservateur, un nutriment et/ou un agent modifiant les propriétés physiques.

18. Le procédé selon l'une quelconque des revendications 14 à 17, dans lequel la composition est appliquée à raison d'environ 1 × 10⁴ à environ 1 × 10¹⁴ unités formant colonie (UFC) par hectare ou d'environ 0,1 kg à environ 20 kg de solides de fermentation par hectare.

19. L'utilisation non thérapeutique d'une composition comprenant une culture biologiquement pure de *Paenibacillus terrae* souche NRRL B-50972 ou NRRL B-67129, ou une préparation acellulaire de celle-ci, pour lutter contre des ravageurs animaux qui sont des nématodes, pour protéger un végétal utile ou une partie d'un végétal utile nécessitant une protection contre les dommages causés par ledit ravageur animal, ou pour protéger une semence ou un végétal issu de la semence contre les dommages causés par ledit ravageur animal.
